# EUROPEAN PATENT SPECIFICATION

(11) **EP 1 910 914 B1**
(45) Date of publication and mention of the grant of the patent: **07.03.2012**
(21) Application number: 07709602.2
(22) Date of filing: 04.01.2007
(51) Int. Cl.: G06F 3/033, G09G 5/08

(54) **THREE-DIMENSIONAL FORCE INPUT CONTROL DEVICE AND FABRICATION**
DREIDIMENSIONALE VORRICHTUNG ZUR STEUERUNG DER EINGANGSKRAFT UND HERSTELLUNG
DISPOSITIF DE COMMANDE D'ENTREE DE FORCE TRI-DIMENSIONNELLE ET FABRICATION

(30) Priority: 05.01.2006 US 756200 P
(43) Date of publication of application: 16.04.2008
(73) Proprietor: Vaganov, Vladimir, Los Gatos, CA 95032 (US)
(72) Inventor: Vaganov, Vladimir, Los Gatos, CA 95032 (US)
(74) Representative: HOFFMANN EITLE
(86) International application number: PCT/US2007/000411
(87) International publication number: WO 2007/081883

(56) References cited:
- US-A1- 2005 160 814
- US-A1- 2005 161 489
- US-A1- 2005 170 544
- US-A1- 2005 190 152
- US-A1- 2005 190 152

## Description

The present invention relates generally to semiconductor devices, Micro Electro Mechanical Systems (MEMS), sensors and more specifically to three dimensional (3D) three-axis force sensors integrated with signal processing electronic circuits on one substrate. It is applicable to three-axis finger force sensors, finger-mouse and micro-joysticks for consumer and other applications.

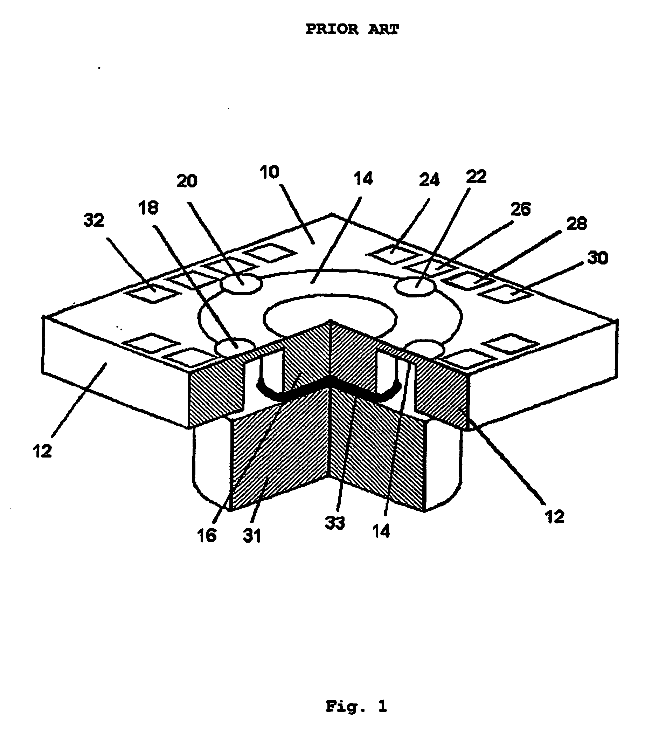

3D force sensors based on micro-machined silicon chips with stress sensitive components on flexible diaphragm are known. Prior art shown in Fig.1, uses a sensor chip 10 from a rigid frame 12 and rigid central part 16 of a die, boss, connected with the frame by a thinner diaphragm 14. An externally applied force is transferred to the rigid island 16, the deflection of the island creates deformation and stress in the elastic diaphragm element 14, reaching the locations of the stress sensitive IC components 18, 20, 22. Because the rigid island 16 is located within the thickness dimension of a die 10 and the width of a circular diaphragm is small and in the sub-millimeter range, it is very hard to apply external forces in lateral X and Y directions to the rigid island 16 to provide good response, and hence their use is constrained from many consumer devices and interfaces.

In order to resolve this deficiency a rigid force-transferring element 31 is added to the structure of the die 10 and island 16. This rigid force-transferring element 31 is firmly coupled to the rigid island 16 of a sensor die 10 through intermediate layer 33. This extension of the rigid island height above the die frame thickness enhances sensor sensitivity to the applied vector force in all orthogonal directions. These components of force are transferred to a rigid island of the sensor die and then to the elastic element and sensitive IC components.

However, the disadvantages of these kinds of solutions are the requirement of additional wafer for the rigid force-transferring elements, additional micro-machining, aligning and bonding two wafers, a more complicated process of separating dice from the wafer and generally a more expensive fabrication process.

US 2005/0190152 A1 describes a method and device for 3-dimensional input finger control of different functions in electronic consumer devices. Various versions provide a 3-dimensional input finger interface control device for cell phones, portable garners, digital cameras, and other consumer devices. Certain alternate versions exhibit one or more of the qualities of smallness, low-cost, high reliability, and/or high stability. Certain still further versions provide a 3-dimensional input finger force control device that (1.) accommodates a required ratio between X, Y and Z sensitivities, (2.) has low cross-axis sensitivity, (3.) allows process integration with other sensors and CMOS, (4.) is scalable, (5.) allow convenient solutions for applying an external force, and/or (6.) allows economic manufacturability for high volume consumer markets.

What is needed are devices that reduce cost of fabrication and manufacture as well as providing an easy integration with the higher density IC circuitry on silicon substrate.

An object of the present invention is to provide a 3-dimensional force input control device for high volume consumer markets like cell phones, portable garners, digital cameras, etc.

Another object of the present invention is to provide a method of fabrication of a 3-dimensional force input control device used for integrating in various functions in electronic devices.

Another object of the present invention is to provide a low cost 3-dimensional force input control device.

Another object of the present invention is to provide a finger tip size 3- dimensional force input control device.

Another object of the present invention is to provide a high reliability 3-dimensional force input control device.

Another object of the present invention is to provide a high stability 3-dimensional force input control device.

Another object of the present invention is to provide a 3 -dimensional force input control device, which accommodates a sufficiently low noise ratio between X,Y,Z sensitivities.

Another object of the present invention is to provide a 3-dimensional force input control device, which has low cross-axis sensitivity.

Another object of the present invention is to provide a 3-dimensional force input control device, which allows process integration with other sensors and CMOS.

Another object of the present invention is to provide a 3-dimensional force input control device, which is scalable.

Another object of the present invention is to provide a 3-dimensional force input control device with required combination of applied force and deflection.

Another object of the present invention is to provide a 3-dimensional force input control device, which enables better economics of manufacturability for high volume consumer markets.

According to a first aspect of the invention, there is provided a three-dimensional force input control device for sensing vector forces and converting them into electronic signals for processing on a single substrate comprising: a sensor die formed within said single semiconductor substrate; an elastic element within said semiconductor substrate; a frame formed around said elastic element and coupled with at least part of the periphery of said elastic element all within the substrate; at least three mechanical stress sensitive IC components located in the elastic element for providing electrical output signals proportional to the mechanical stress in the location of the IC components; and a rigid island element formed in the semiconductor substrate, surrounded by and coupled with the elastic element and for transferring an external vector force to the elastic element and through to the IC components, which provide electrical output signals, wherein the height of the rigid island element is bigger than the difference between the thicknesses of the frame and the elastic element.

According to a second aspect of the invention, there is provided a method of fabricating a three-dimensional force input control device for sensing vector forces and converting them into electronic signals for processing on a single substrate, the method comprises the steps of: providing a semiconductor substrate having a first side and a second side; fabricating stress-sensitive IC components and signal processing IC on the first side of the substrate; fabricating closed trenches on the second side of the substrate, the trenches forming boundaries defining an elastic element, a frame area formed around said elastic element, and a rigid island element being surrounded by said elastic element; and removing additional substrate material from the second side of the substrate in the frame area leaving the dimension of the rigid island element protruding outward from the second side and larger than the remaining thickness dimension of the frame area minus the thickness of the elastic element, whereby the rigid island element extends out from the substrate for coupling with external force transferring elements or for receiving external mechanical forces, and for transferring an external vector force to the elastic element and through to the IC components which provide electrical output signals.

For a better understanding of the invention and to show how the same may be carried into effect, reference will now be made, by way of example, to the accompanying drawings, in which:
Fig. 1 shows a prior art 3D force sensor chip with rigid force transferring island located within the thickness dimension of a die and additional force transferring element connected to the top portion of the rigid island;
Fig. 2 shows an isometric top and bottom views of a force sensor die and its major micro-constructive elements according to an embodiment of the present invention;
Fig. 3 shows the principle of a 3-dimensional input finger control of different functions in hand-held devices, where 3D force sensor die is connected to the external button for applying the force through a spring like element allowing control to achieve the required combination of sensitivity, range and accuracy of applied force or deflection according to an embodiment of the present invention;
Fig. 4 shows an example of a flat low profile finger force control device based on elastomeric button directly connected to the force sensor die in accordance with an embodiment of the present invention;
Fig. 5 illustrates a flat finger force control device with an elastomeric button directly connected to the rigid force-transferring element and comprising a tactile sensation mechanical feedback for sensing the click of a depressed button in accordance with an embodiment of the present invention;
Fig. 6 shows an example of a joystick type finger force control device based on a elastomeric protrusion body spring back deformable element directly coupled with the rigid force-transferring element transferring the force vector to the sensor die mounted on the intermediate substrate die in accordance with an embodiment of the present invention;
Fig. 7 shows another example of a flattened head joystick type finger force control device, where sensor die is mounted directly to the PCB in accordance with an embodiment of the present invention;
Fig. 8 shows an example of a flexing flat head finger force control device comprised of a rocking elastic plastic button directly coupled to a rigid force-transferring element of a force sensor die and embedded in a layer of plastic, which serves as an integrated button die in accordance with an embodiment of the present invention;
Fig. 9 shows another example of a flexing flat head finger force control device comprised of a rocking elastic plastic button directly coupled to a rigid force-transferring element of a force sensor die and comprising a tactile mechanical feedback on the surface of the button for a tactile sensation mechanical feedback responsive to button depression in accordance with an embodiment of the present invention;
Fig. 10 shows an example of finger force control device based on elastomeric package directly connected to the rigid force-transferring island and comprising connections with different buttons depending with various design die in accordance with an embodiment of the present invention;
Fig. 11 shows an example of a flat finger force control device with an additional force-transferring element and a springy shell for sensing the click of a depressed button in accordance with an embodiment of the present invention;
Fig. 12 shows another example of a flexing flat head finger force control device comprised of a rocking elastic plastic button directly coupled to an additional force-transferring element having increased bonding force to the plastic button and comprising a tactile mechanical feedback on the surface of the button for a tactile mechanical feedback responsive to button depression in accordance with an embodiment of the present invention;
Fig. 13 shows an example of a fabrication process based on the local etching of the diaphragm first and then thinning the die frame in accordance with an embodiment of the present invention;
Fig. 14 shows an example of a fabrication process based on the local etching of the diaphragm to a certain depth, and then thinning the die frame and continuing etching the diaphragm at the same time in accordance with an embodiment of the present invention;
Fig. 15 shows an example of a fabrication process based on the local etching of the diaphragm first, then depositing a mask layer on the diaphragm area and then thinning the frame by etching die in accordance with an embodiment of the present invention;
Fig. 16 shows an example of a fabrication process based on deposition of two layers of masking materials and two lithographic processes allowing etching a step profile fabricating the diaphragm area and thinning the frame in accordance with an embodiment of the present invention;
Fig. 17 shows an example of a fabrication process based on deposition of one layer of masking material and two lithographic processes allowing etching a step profile fabricating the diaphragm area and thinning the frame die in accordance with an embodiment of the present invention;
Fig. 18 shows an example of a fabrication process based on deposition of one layer of masking material and two lithographic processes allowing etching an elastic element, separating trenches for dicing and thinning the frame at the same time in accordance with an embodiment of the present invention;
Fig. 19 illustrates additional steps in fabrication of an alternate larger surface for force-transferring element, for providing stronger adhesion between the pin and the plastic material on the top of the die, in accordance with the another embodiment of the invention; and
Fig. 20 illustrates another additional steps in fabrication of an alternate larger surface for force-transferring element, for providing stronger adhesion between the pin and the plastic material on the top of the die and providing additional force overload protection, in accordance with the another embodiment of the invention.

Specific embodiments of the invention will now be described in detail with reference to the accompanying figures.

In the following detailed description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description.

The following describes a three-dimensional force input control device for sensing vector forces and converting them into electronic signals for processing in an electronic signal processing system with all components within a sensor die fabricated from the single semiconductor substrate. The typical device comprises a sensor die formed within semiconductor substrate, an elastic element within said semiconductor substrate, a frame formed around said elastic element and coupled with at least part of the periphery of said elastic element all within the substrate, at least three mechanical stress sensitive IC components located in the elastic element for providing electrical output signals proportional to the mechanical stress in the location of the IC components, at least one rigid island element formed in the substrate and coupled with the elastic element, this rigid island transfers an external vector force to the elastic element and through the IC components which provide electrical output signal, this rigid island has a height bigger than the thickness of the frame minus thickness of the elastic element, at least one spring element coupling the force-transferring element with an external force and at least one electronic circuit for processing output signals from the mechanical stress sensitive IC components.

All elements can vary in design and material in order to realize different aspects and advantages.

Several methods of fabrication are disclosed, with a typical method comprising the steps of providing a semiconductor substrate having a side one and a side two; fabricating stress-sensitive IC components and signal processing IC on side one of the substrate; fabricating closed trenches on side two of the substrate, the trenches forming boundaries defining elastic elements, frame elements, and rigid islands, trenches for die separation, and removing additional substrate material from side two of the substrate in the frame area leaving the dimension of the rigid island protruding outward from side two and larger than the remaining thickness dimension of the frame minus the thickness of elastic element, leaving the rigid island extending outward from the substrate for coupling with external force transferring elements or for receiving external mechanical forces in any and all directions. Removal of part of the substrate from side two frame element can be done by selective etching.

A variation for fabricating closed trenches on side two of the substrate within a die area further comprises depositing protective masking layer on side two of the substrate; photolithographically defining a pattern of the rigid island, elastic element, frame and separating dice trenches, removing masking layer.from elastic element and separating dice trenches and etching substrate from side two of the substrate in the elastic element and separating dice trenches areas to a selected thickness such that the closed separating trenches provide the shape and thickness contours in the substrate for separating the die in accordance with the defined pattern using less substrate and producing less waste.

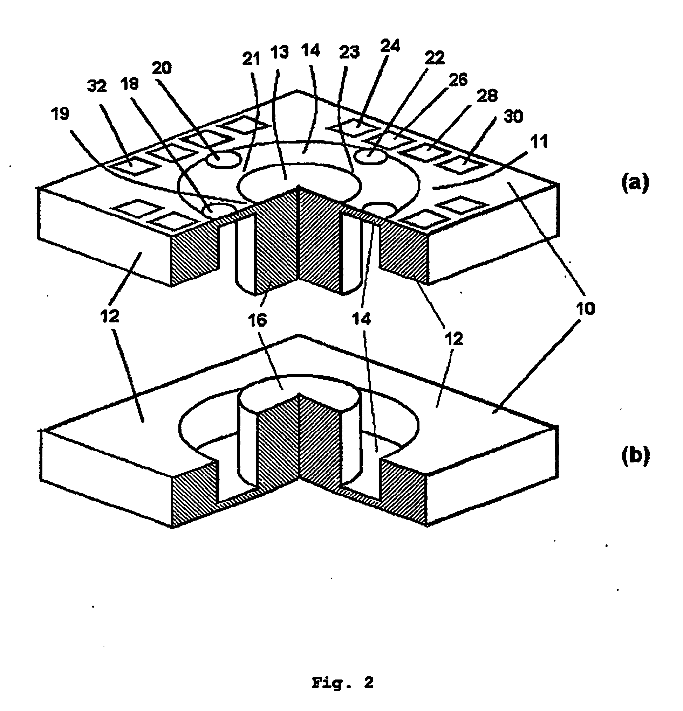

Figs. 2-13 show various embodiments of 3D force input control devices, dice microstructures and fabrication methods. The detailed description of the microstructures, devices and methods of fabrication according to embodiments of the present invention are presented below.

Referring to embodiments in Figs. 2(a)-(b), the isometric and a cross section view of the top planar side of a force sensor die and its major micro-constructive elements are shown. The isometric bottom side reflection and cross sectional view of the die are shown in Fig. 2b. The die 10 has frame 12 surrounding an elastic element 14. In this embodiment the elastic element 14 is circular and acts as a diaphragm. A central rigid island 16 is coupled to and within the center of the diaphragm 14. On a circular diaphragm 14 planar top side there are a number of areas 18, 20, 22 where mechanical stress sensitive IC components are effectively located. The IC components 18, 20, 22 are located on the periphery of the diaphragm adjacent to a frame 12, and electrically connected to contact pads 24, 26, 28, 30, 32 without metal conductors on the surface of a diaphragm. This configuration yields better sensor stability. Stress sensitive IC components 18, 20, 22 can also be located on the other areas of the diaphragm, for example in the areas 19, 21, 23, as shown in Fig. 2a.

The stress sensitive components occupy a relatively small area on the surface of the die. The majority of the area is used for integration of the signal processing IC. These IC components can be located on the frame area 11, or on the rigid island area 13 or even on the elastic element area 14. As the process of stress sensitive components is compatible with the regular CMOS process, then any integrated circuit, which can be fabricated with CMOS process, can be integrated at the same die. In particular these integrated IC can provide the functions of analog signal amplification, analog analog-to-digital and digital-to-analog conversion, multiplexing, signal processing, gate logic, memory, digital interface, power management, encryption, compression and decompression, mixed signal processing, transmitting and receiving wireless signals, sensing various physical domains other than force and combinations.

An externally applied force is transferred to the rigid island 16, the deflection of the island creates deformation and stress in the elastic diaphragm element 14, reaching the locations of the stress sensitive IC components 18, 20, 22. These at least three sensitive IC components create a unique combination of the signals relative to a specific value and direction of the applied vector force. Calibration and processing sensor signals by integrated IC allows determination of the values of the force vector components and therefore also the value and a direction of the externally applied force.

In another embodiment, illustrated in the Fig.2, the rigid island 16 located within the die 10 protrudes out from the frame 12, or has larger dimension of height than the thickness of the frame 12 minus the thickness of the diaphragm 14. It allows more efficiently apply an external force in lateral X and Y directions, provides high sensitivity, and simplifies the geometrical microstructure of the sensor die. The cost of manufacturing of the device is consequently reduced substantially due to the elimination of need for an additional wafer and corresponding processing steps. The described embodiment microstructure enhances sensor sensitivity to the applied vector force in all three orthogonal directions. These components of force are transferred directly to a rigid island of the sensor die and then to an elastic element and sensitive IC components.

The challenge of practical application of 3D force sensors, as input force controlled devices, is that the deflection of the rigid island 16 in semi-conductor type materials is negligible. The psychological response to the control of the applied force is based on the applied force or, for example pressure on the finger. For good finger control, some range of deflection is required, and this range would also increase the accuracy of applying input signals matching a range of applied force and sensitivity of the device.

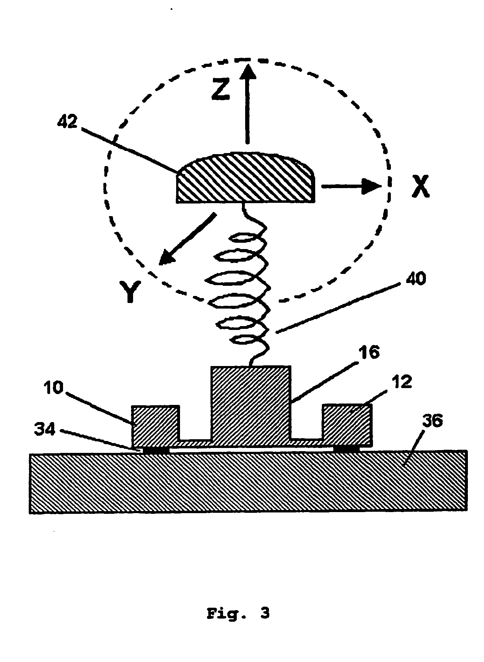

An aspect of the invention resolving this issue is illustrated in Fig.3 according to a third embodiment. A two ended spring element 40 is added to a sensor. The first end of spring element 40 is coupled to a rigid island 16 of a sensor die 10, which has a frame 12 and contact pads 34. The second end of the spring element 40 is connected to a button 42, where the external force vector is applied. The spring element 40 phases the deflection, increases the range of motion or applied force and accuracy of the input mechanical signal. As another benefit, the spring element 40 also increases the range of the opportunities in designing the microstructure of the sensor die for better performance from variable stiffness, reliability and cost.

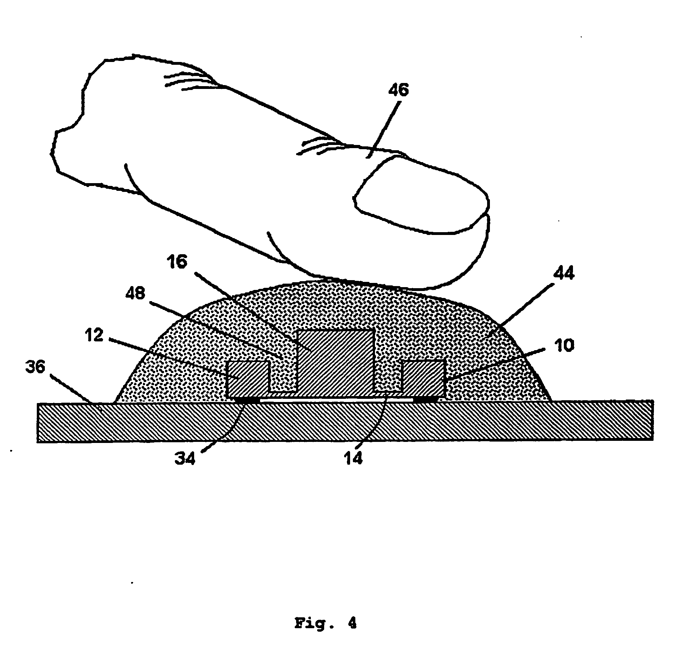

As illustrated in Fig.4, for some finger mouse applications, there is a need for a small but responsive deflection of a button and input force controlled devices. These are satisfied by shaping a flat button according to another embodiment of the invention. A sensor die 10 is bonded to a substrate 36 with the contact pads 34. The sensor die 10 is covered with elastic plastic material 44 forming a desired shape of a button.

The external force is applied to an elastic button, for example by a finger 46. Normal and sheer force are transferred through the elastic material of a button to the rigid island 16, elastic element 14 and finally to the stress sensitive IC components, result in output electrical signals proportional to an applied external force.

The size of a sensor die and the viscosity and elasticity of an elastic material of the plastic button determine the response characteristics of the sensor to a large degree. The elastic plastic material 44 covers the sensor die 10 directly from the back profiled side and might filling in the cavity 48 between the frame 12 and the rigid island 16. Normal and sheer force applied by a force are transferred through the elastic material of a button directly to the rigid island 16 and then to the stress sensitive IC components.

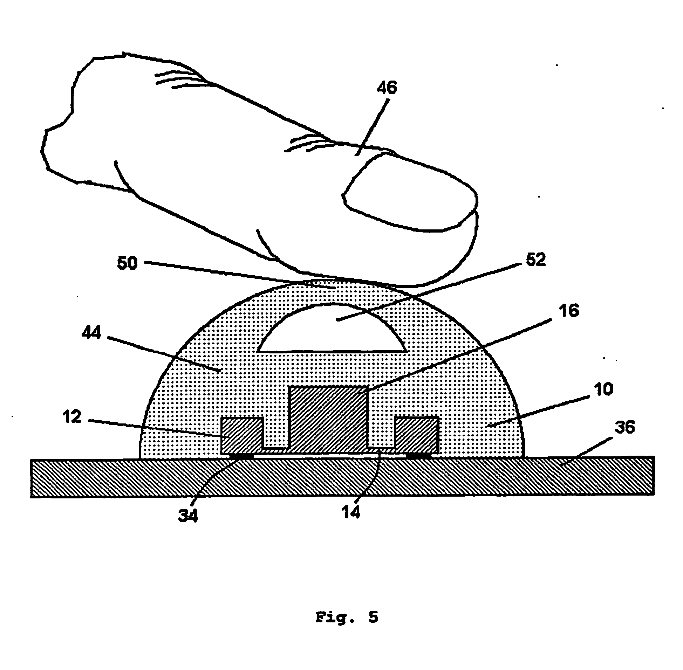

In many applications X and Y components of a force vector are used for a navigation by cursor on the screen of an electronic device while. When position of a cursor is selected then the action button is actuated. In most cases this action button is separated from the X-Y cursor navigation system like in finger point mouse of IBM Think Pad. Action button especially in portable devices preferably requires mechanical feedback or mechanical clicking function, which can be sensed by tactile sensors of the finger. As proposed finger force control device combines X, Y and Z control functions in one 3D sensor, Z control can be used as an action button eliminating the need for a separate control action button. The mechanical clicking feedback function can be incorporated in the device, as illustrated in Fig. 5, according to the fifth embodiment of the present invention.

The sensor die 10 is bonded to a substrate 36 with the contact pads 34. The sensor die 10 is covered with elastic plastic material 44 forming a desired shape of a button. The external force is applied to an elastic button, for example by a finger 46. Normal and shear forces are transferred through the elastic material of the button to the rigid island 16, elastic element 14 and finally to the stress sensitive IC components, which result in output electrical signals proportional to X and Y components of the external force.

In the top portion of the elastic plastic button the tactile sensation mechanical feedback allows sensing the click of the pressed button, because it has a springy shell structure 50 with the cavity 52 beneath. When pressed from the top it buckles slightly, retaining continuity but sending a click sensation to the finger 46. This springy shell can be made from different materials including metals and plastics. The buckling action creates not only a tactile feedback but also generates short pulses in the mechanical sensitive components, which can be used as signals for activation of certain electronic action.

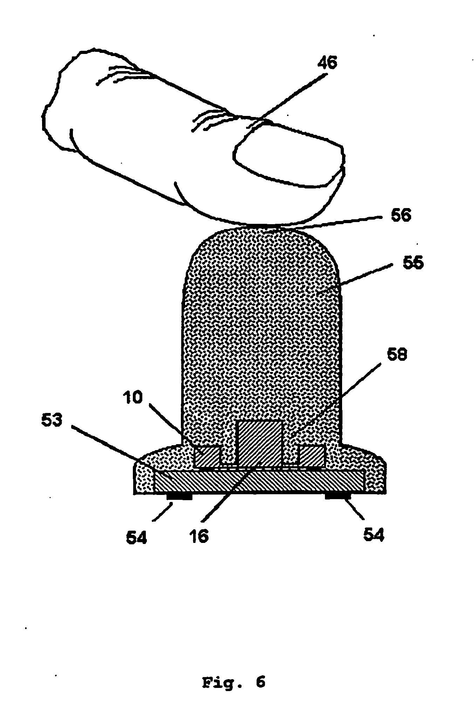

As illustrated in Fig.6, the spring element 54 providing required range of deflection and sensitivity can be made from the elastic plastic material according to sixth embodiment. In this embodiment the sensor die 10 and the rigid force-transferring island 16 are mounted on the intermediate substrate 53, which has contact pads 54. The elastic plastic package material 55 covers the above elements and forms a flexible protrusion. The extended end of the protrusion 56 serves as a button for tactile contact An external force applied, via finger 46, to a button 56 bends the protrusion 55 creating mechanical stress and deflection within the plastic in the device base area 58 between the sensor die and the rigid force-transferring island 16. This induced stress is transferred to the sensor die and finally to the stress sensitive IC components. This design of a micro-joystick allows achieving very low cost in production due to its design simplicity and existing well-developed mass manufacturing technologies.

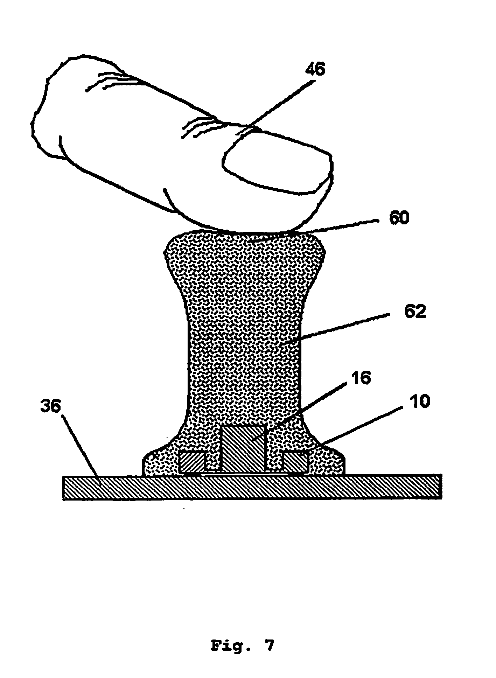

Another embodiment of a plastic elastic finger joystick with flattened head 60 at the protruding end of the stick is shown in Fig.7. The plastic stick 62 can be fabricated in various shapes, colors and elasticity, depending on the application and requirements. In this embodiment the sensor die 10 is mounted directly to the PCB 36 of an electronic device.

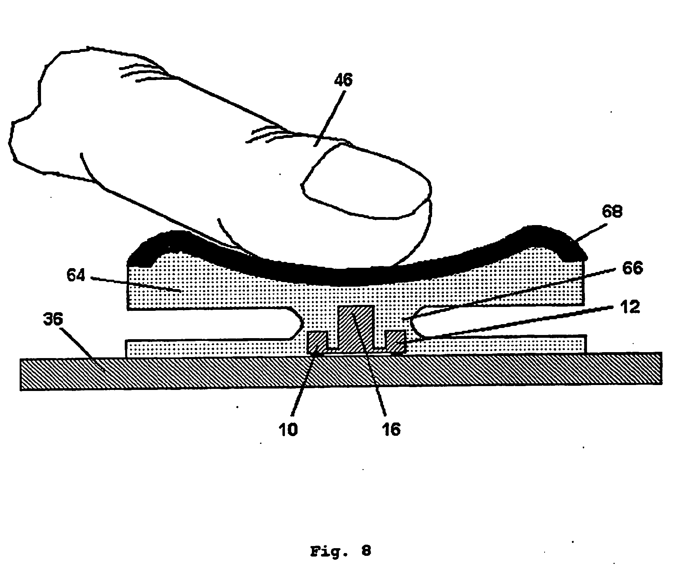

For computer mouse applications at times there is need for small deflections of a button as compared with large joystick applications, but the height of an input control device can be governing. For these applications, as illustrated in Fig.8, the spring element providing required range of deflection and sensitivity can be made as a low profile rocking two vertebrae spine design according to another embodiment Here, the sensor die 10 with the rigid force-transferring island 16 is mounted on the substrate 36. The elastic plastic 64 covers all above elements and forms a flexible neck 66. The top surface of the button is covered with a hard layer of plastic 68 serving as a surface where an external force is applied. The force applied, for example by a finger 46, to the top hard layer 68 of the button, rocks the button 64 creating the mechanical stress and deflection within the plastic in the neck area 66 between the sensor die 10 and the rigid force-transferring island 16. This stress is transferred to the sensor die and finally to the stress sensitive IC components.

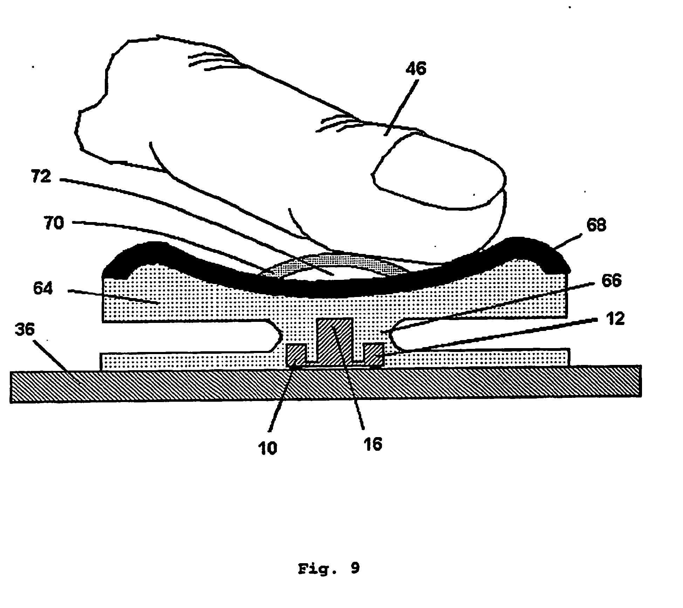

A flexing flat head finger force control device is shown in Fig.9. It comprises a rocking elastic plastic button 64 directly coupled to a rigid force-transferring island 16 of a force sensor die and comprising a tactile sensation mechanical feedback 70 on the surface of the button 68 allowing sensing the click of the pressed button according to the another embodiment of the present invention.

In the top portion of the plastic button 68 the tactile sensation mechanical feedback 70 allowing sensing the click of the pressed, button is incorporated. It has a springy shell structure 70 with the cavity 72 beneath it. When being pressed from the top it reaches the threshold after which it buckles, creating a clicking sensation in the force applying finger 46. This springy shell can be made from different materials including metals and plastics. The clicking action creates not only a tactile feedback but also generates a short pulses in the mechanical sensitive components, which can be used as signal for activation of other programmable action.

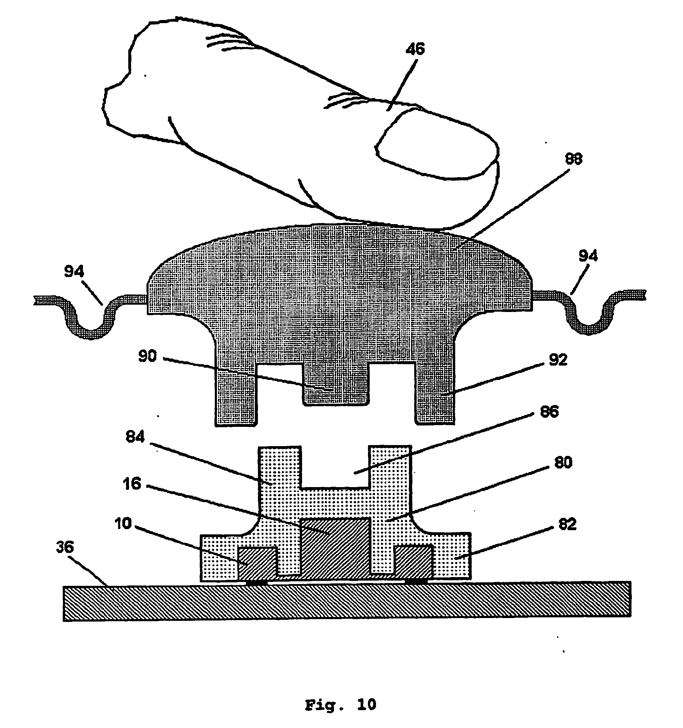

Many applications and designs of portable devices require various control buttons in size, shape, color and material while functionality is maintained. In an embodiment of the invention, a detachable button, as illustrated in Fig. 10, can be used..

The finger force control device has an elastomeric package 80 directly connected to the sensor die 10 comprising rigid force-transferring island 16. It also comprises means 84, 86 for connecting with different buttons 88. These buttons also have corresponding and matching means 90, 92 for connecting with control device package 80. The external design of the button 88 depends on specific application requirements. The button 88 can be either a separate component or can be integrated in the mat 94 of the keyboard of portable device.

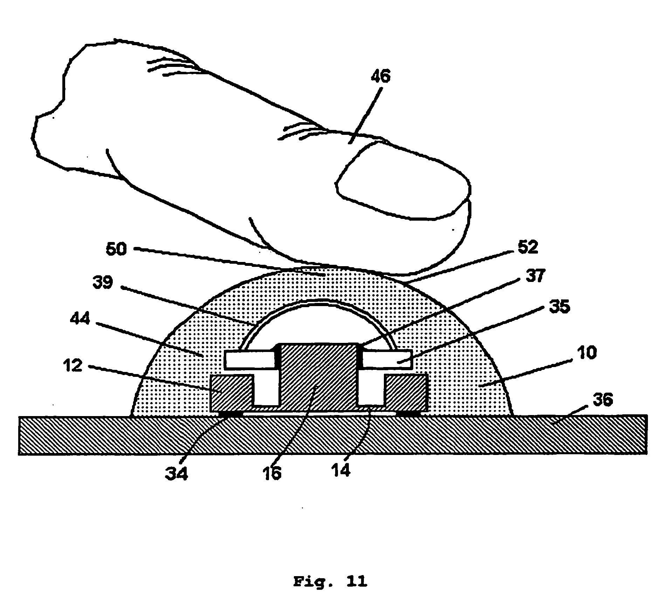

In some applications, the small surface size of the rigid island pin might not provide a long-term strong adhesion between the pin and the plastic material of the button attached. An increased surface of the rigid pin can be achieved by fabricating an additional force-transferring element 35, as it shown in Fig. 11 according to the another embodiment of the present invention. This force-transferring element may have a hole where rigid pin can be inserted and mechanically connected to the pin with either glue, or solder, or some other attaching mechanism. This force-transferring element can be made from different materials, for example from plastic, metal, semiconductor, ceramic, etc. It also can be connected and bonded to the pin in a batch fabrication manner, for example to the whole wafer or to a number of wafers at the same time.

An additional force-transferring element 35 can serve, as a platform for mounting a springy shell 39, as shown in Fig. 11. This springy shell 39 can be mounted on the surface of force-transferring element either individually with automated pick and place equipment or in a batch fabrication manner.

There are different designs. One is that a substrate, with the additional force-transferring elements, is bonded to the wafer of force sensor dice and then with the substrate of the springy shells. Another design is substrate with the additional force-transferring elements bonded first to the substrate of the springy shells and then to the wafer with the force sensor dice. The sensor die, the additional force-transferring element and the springy shell, after singulation from the wafer, are covered with plastic material 44, as shown in Fig. 11, forming an external force-transferring element for contact with an external force, eg. a finger 46.

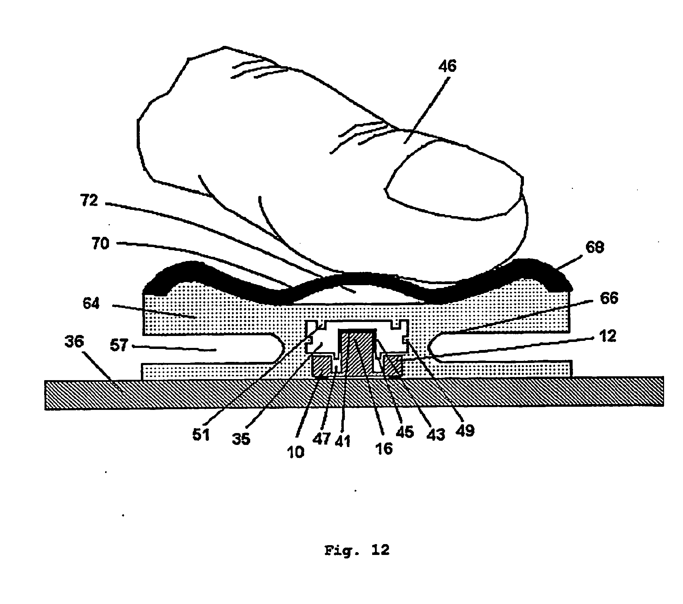

An additional force-transferring element 35, shown in Fig. 12, can be more complex in shape according to another embodiment of the present invention. This force-transferring element also can be made from a variety of materials, including plastic, metal, semiconductor, ceramic, etc. It also can be connected and bonded to the pin in a batch fabrication manner at the wafer level.

In another embodiment, an additional force-transferring element 35 has a cavity 41 for accepting the rigid pin 16, which are bonded with adhesive material 43. There is a portion 45 which is inserted into the trench 47 proximate to the rigid pin 16 and serves several purposes. First, it increases the surface of connection with the pin and strengthens bonding and reliability of the device. Second, it prevents plastic 64 from going into the trench 47 during molding of the external force-transferring element. Third, it serves, as in additional stop, limiting mechanical overload in X, Y and Z directions.

The additional force-transferring element 35 has cavities or bumps 49, 51 on the surface of this element for stronger bonding with plastic material 64 of the external force-transferring element. It provides higher reliability.

Fabrication of a 3D force sensor die from a single substrate and for the lowest cost represents the biggest challenge. There are several options in batch fabricating senor dice.

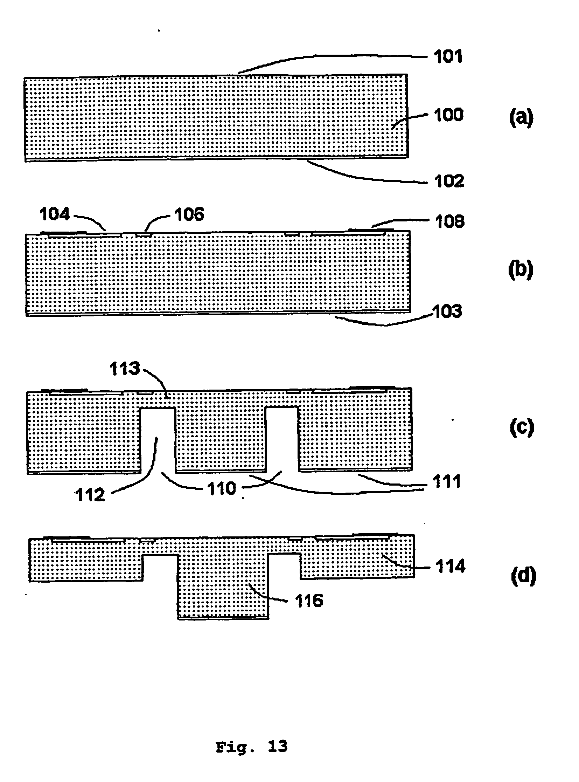

Fig. 13a-13d illustrate the fabrication according to the another embodiment of the present invention. Fig. 13a shows an initial silicon substrate 100 having surface one 101 and surface two 102. The wafer initially goes through the standard CMOS process fabricating IC circuitry 104, sensitive components 106 and contact pads 108, as it shown in Fig. 13b. After a standard CMOS process, a masking layer 103 is deposited on the side two of the wafer. A double-side lithography is made from the side two of the wafer opening the elastic element area 110, leaving the masking layer 111 on the frame and the rigid island, as shown in Fig. 13c. Next a deep local etching of silicon wafer is applied from the backside of the wafer forming the trench 112 to the depth for design dimensions the elastic element 113. Local etching can be done by different types of dry or wet etching known in the art, for example by RIE, dry plasma etching, electro-sparking, wet isotropic and anisotropic etching, etc. After that silicon is removed locally from the frame elements 114 backside of the wafer, as it shown in Fig. 13d. As a result, the height dimension of the rigid islands 116 becomes larger than the remaining thickness if the frame 114 minus thickness of the elastic element 113. The last step of removing silicon from the frame area can be done by different ways including mechanical milling, electro-sparking, abrasive milling and different kind of etching, dry and wet.

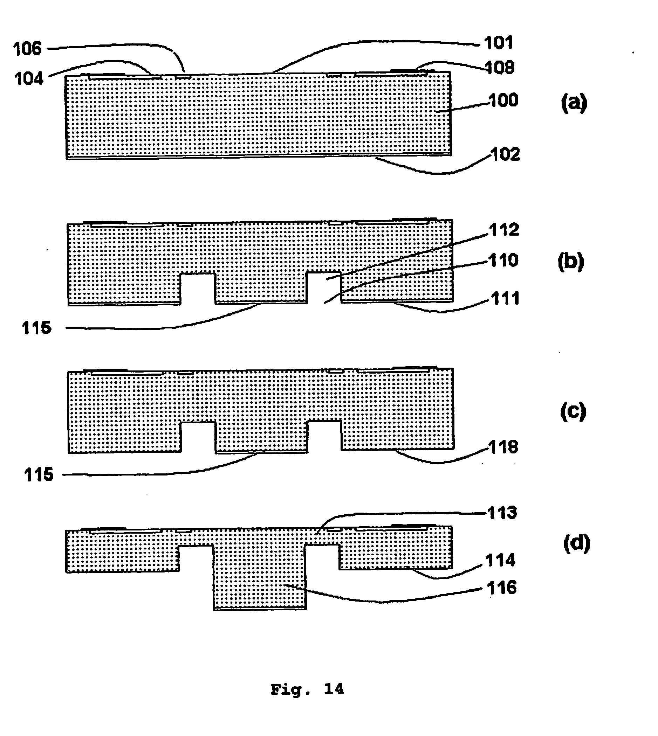

Fig. 14a-14d illustrates a fabrication method according to another embodiment of the present invention. Fig. 14 a shows an initial silicon substrate 100 having front surface (side one) 101 and back surface (side two) 102. The wafer first goes through the standard CMOS process fabricating IC circuitry 104, sensitive components 106 and contact pads 108, as it shown in Fig. 14a. After a standard CMOS process, a masking layer 111 is deposited on the backside of the wafer. A double-side lithography is made from the backside of the wafer opening the elastic element 110 and leaving the masking layer 111 I on the frame and 115 on the rigid island, as shown in Fig. 14b. Next a deep local etching of silicon wafer is made from the backside of the wafer forming the trench 112 to the depth equal to the difference between the final thickness of the frame and design thickness of the elastic element 113. This local etching can be done by different types of dry or wet etching known in the art, RIE, dry plasma etching, electro-sparking, wet isotropic, anisotropic etching, etc. Next that masking layer 111 is removed from the frame element 118, as shown in the Fig. 14c. The etching process from the backside of the wafer continues etching elastic element and frame element simultaneously, shown in Fig. 14d. As a result, the height dimension of the rigid island 116 becomes larger than the remaining thickness of the frame 114 minus thickness of the elastic element 113 and the thickness of the elastic element reaches design thickness. The step of removing silicon from the elastic element and frame element can be done in various ways including different kind of etching, dry and wet, for example by RIE.

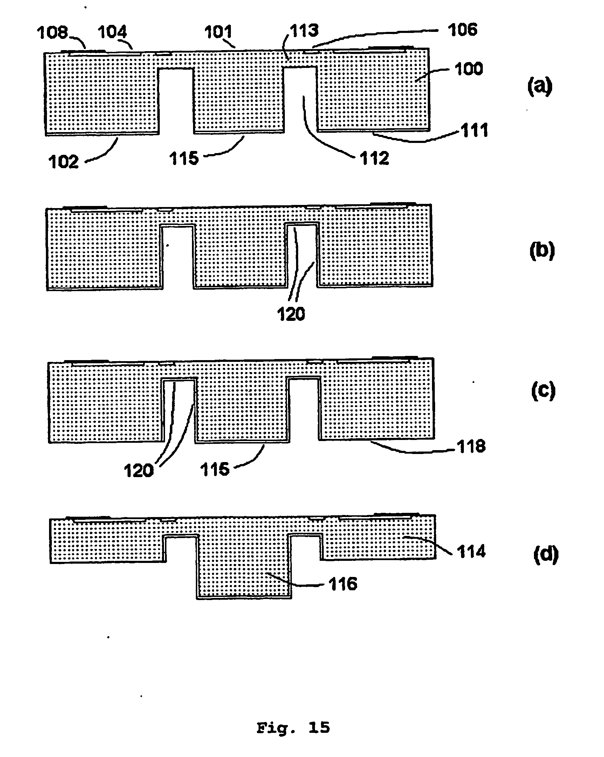

Fig. 15a-15d illustrate the fabrication method according to yet another embodiment of the present invention. Fig. 15a shows a silicon substrate 100 having front surface 101 and back surface 102 after a CMOS process was completed and the trenches 112 around rigid island 116 were etched forming an elastic element 113. After that a masking layer 120 is deposited on the backside of the wafer masking the sidewalls of the trenches and the surface of the elastic element 113, as it shown in Fig. 15b. The next step is removing a masking layer from the frame area 118, as shown in Fig. 15c leaving the mask 115 and 120 on the rigid island and trench including back surface of the elastic element 113. Next the silicon is removed locally from the frame areas from the backside of the wafer, as it shown in Fig. 15d. As a result, the height dimension of the rigid islands 116 becomes larger than the remaining thickness if the frame 114 minus thickness of the elastic element 113. The last step of removing silicon from the frame area can be done in a variety of ways including different kind of etching, dry and wet.

One of the challenges in methods described above is removing mask from the frame element, when some kind of profile is already fabricated on the backside of the wafer. This can be achieved by masking the backside of the wafer by two layers of masking materials having etching selectivity to each other and two lithographic processes made on the initial flat surface of the wafer backside according to another embodiment of the present invention.

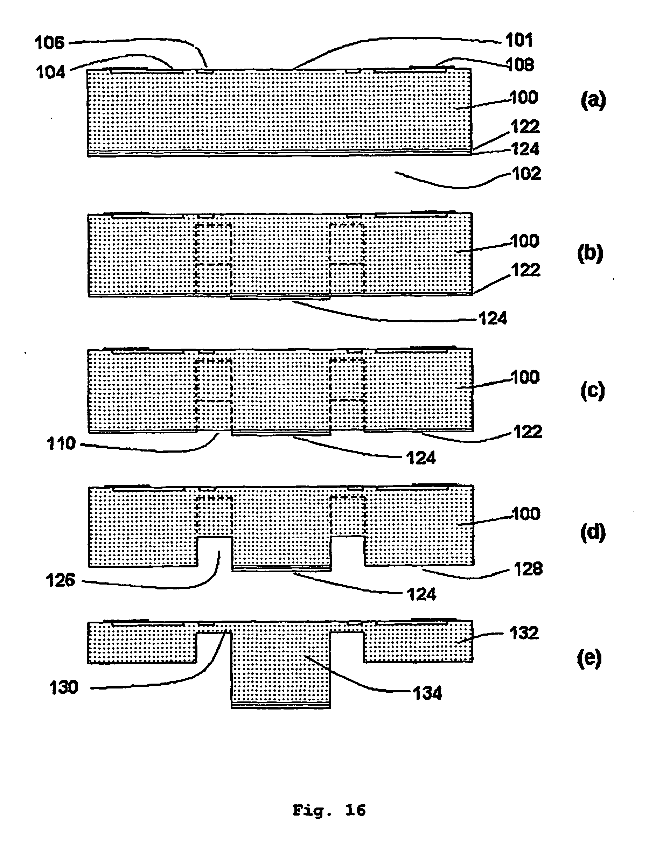

Fig. 16 a shows a silicon substrate 100 having front surface 101 and back surface 102 after CMOS process. Next two masking layers 122 and 124 are deposited on the backside of the wafer, as it shown in Fig. 16a. The masking layer 124 adds high selectivity of etching to masking layer 122. The next step is removing the masking layer 124 from the frame element and elastic element leaving it only on the rigid islands, as shown in Fig. 16b. A second lithography follows, opening the elastic element 110 in the masking layer 122, as shown in the Fig. 16c. As a result, the backside of the wafer has three different etched elements: unmasked area 110, frame element masked with one masking layer 122 and rigid island element masked with masking layers 122 and 124. Next the silicon is etched locally in the elastic element through the masks 122 and 124 to a predetermined depth. Following that the masking layer 122 is etched from the frame element 128 leaving the mask 124 on the rigid island, as shown in Fig. 16d. The next step is a simultaneous etching of the frame and the elastic elements, as shown in Fig. 16e. As a result, the height dimension of the rigid islands 134 becomes larger than the remaining thickness of the frame 132 minus thickness of the elastic element 130 and protrude outward from the substrate.

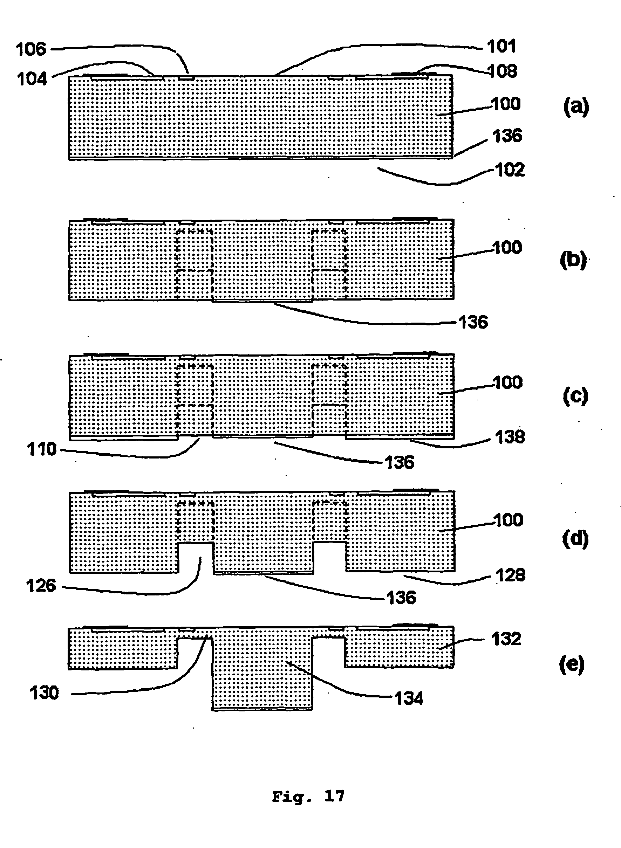

Another process of a double masking process from the backside of the wafer is presented in Fig. 17a-17e according to another embodiment of the present invention. Fig. 17a shows a silicon substrate 100 having front surface-101 and back surface 102 after CMOS process. Next a masking layers 136 is deposited on the backside of the wafer 102, shown in Fig. 17a. The next step is removing a masking layer 136 from the frame and from the elastic element leaving the layer only on the rigid islands, shown in Fig. 17b. A second lithography follows, opening the elastic element 110, as shown in the Fig. 17c. As a result, the backside of the wafer has three different areas: unmasked area 110, frame element masked with photoresist layer 138 and rigid island element masked with masking layer 136. On the next step silicon is etched locally in the elastic element area through the masks 136 and 138 to a predetermined depth. Next the masking photoresist layer 138 is etched off the frame 128 leaving the mask 136 on the rigid island, as shown in Fig. 17d. The final step is a simultaneous etching of the frame and the elastic element, shown in Fig. 17e. As a result, the height dimension of the rigid islands 134 becomes larger than the remaining thickness of the frame 132 minus thickness of the elastic element 130.

The deep etching of the trenches surrounding the rigid islands also etches a substantial part of the wafer thickness, and this process can also be useful for the purpose of singuliting the dice from the wafer without conventional dicing, reducing the overall cost of the device in accordance with another embodiment of the present invention.

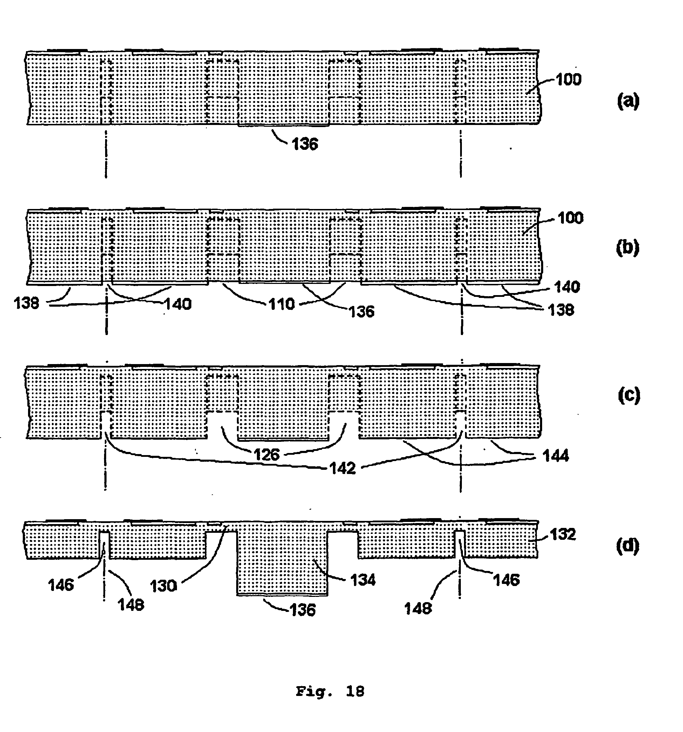

Fig. 18a shows a silicon substrate 100 after CMOS process with the substrate backside of the wafer masked in the rigid islands with the masking layer 136. The second lithography is following up opening the elastic element 110 and dicing trenches 140, as shown in the Fig. 18b. As a result, the backside of the wafer has four different areas: unmasked elastic element area 110, unmasked dicing trenches 140, frame masked with photoresist layer 138 and rigid island masked with masking layer 136. On the next step silicon is etched locally in the elastic element 126 and in the dicing trenches 142 through the masks 136 and 138 to a predetermined depth. Next the masking photoresist layer 138 is etched from the frame area 144 leaving the mask 136 on the rigid island, as shown in Fig. 18c. A simultaneous etching of the frame, the elastic elements and dicing trenches occurs, shown in Fig. 18d. As a result, the height dimension of the rigid islands 134 becomes protruded from the substrate, over the remaining thickness of the frame 132. This occurs simultaneously with the formation of the dicing trenches 146 for singulatiion of the dice from the wafer.

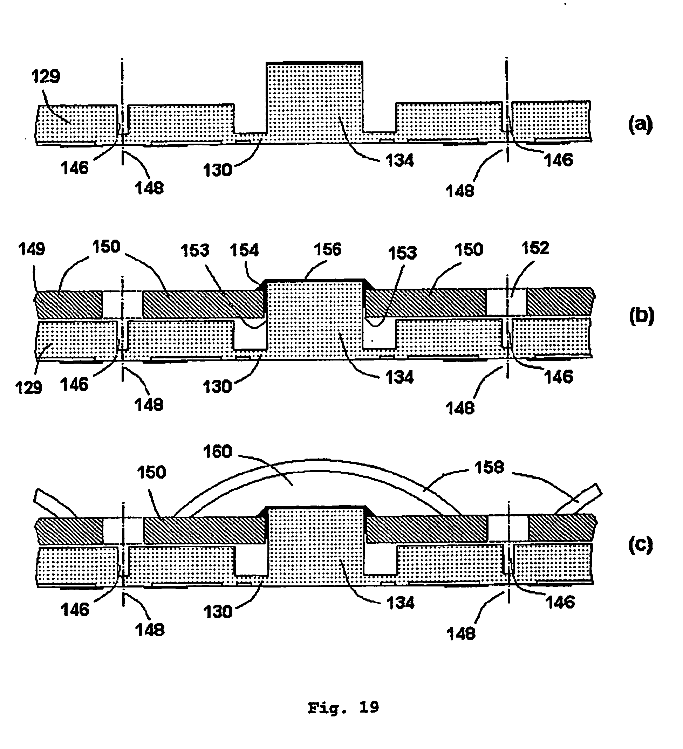

Fig. 19 illustrates additional steps in fabrication process, according to the another embodiment. These steps allow fabricating an additional force-transferring element 150, as it shown in the Fig. 19. This force-transferring element has much larger surface as compared to the surface of the rigid pin 134. It provides a long-term strong adhesion between the pin and the plastic material on the top of the die.

Fig. 19 a shows the completed sensor wafer with the rigid pins protruding from the surface of the substrate wafer. The mechanical substrate wafer 149 is then aligned with the sensor wafer 129 so that pins 134 go through the coupling holes 153 in the substrate 149. Then two wafers are bonded together with material 154, 156. This material can be adhesives, solder, or other material creating strong and rigid bonding between two wafers. The individual elements 150 might be separated from each other at the wafer level by the combination of slots and bridges 152, as it shown in Fig.19b. These slots and bridges are fabricated in the substrate, as holes for the pins are fabricated for mating. At this point the bonded wafers can be diced and application of plastic material on the top of the die for forming external force-transferring element can proceed.

As a continuation of this embodiment, Fig.19c illustrates additional steps in fabrication process. These steps include mounting springy shells 158, as shown in Fig. 19c. These springy shells 158 can be mounted on the surface of force-transferring elements 150 either individually with automated pick and place equipment or in a batch fabrication manner. Next the bonded wafers with springy shells can be diced and/or application of plastic material on the top of the die for forming external force-transferring elements in a batch process.

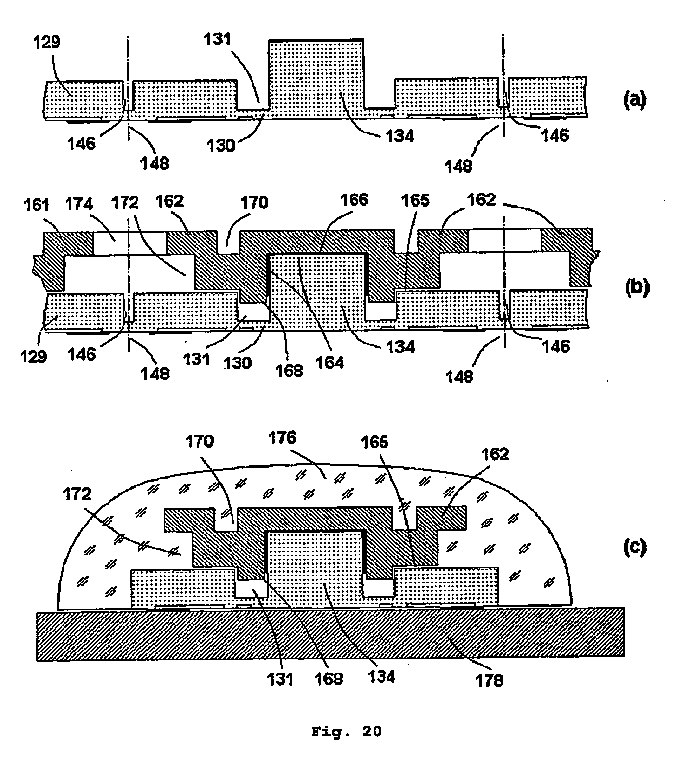

Fig. 20 illustrates the back-end of fabrication process according to another embodiment of the invention. Fig. 20a shows the completed sensor wafer with the rigid pins protruding from the surface of the wafer. The mechanical substrate or wafer 161 is provided. This mechanical substrate can be made from different materials, for example from plastic, metal, semiconductor, ceramic, etc. At least one surface of this mechanical substrate has been profiled in such a way that the cavities 166 for accepting the rigid pins 134 are formed. The other micro-structural elements such as ridges 168, cavities 172 and cavities or trenches 170 along with the other designed micro-structural elements could be fabricated at the same time with the cavities 166 for the pins 134. The mechanical substrate is aligned with the sensor wafer 129 so that pins 134 go into the cavities 166 in the mechanical substrate 161. The depth of the cavity 166, the height of the pin 134 and the thickness of the bonding material 164 all together determine the gap 165 between the frame of the sensor wafer 129 and the additional force-transferring element 162. At the same time ridges 168 go into the closed trench 131 around the pin 164. At the next step two wafers are bonded together with bonding material 164. This material can be either different kind of adhesives or solder, or other material creating strong and rigid bonding between two wafers. The individual elements 162 might be separated from each other at the substrate level by the combination of slots and bridges 174, as it shown in Fig.20b. These slots and bridges are fabricated in the mechanical substrate at the same time, as the other micro-structural elements 166, 168, 170, 172 are fabricated. At this stage the bonded wafers are diced and then plastic material 176 is applied on the top of the dice in a batch-manufacturing manner for forming external force-transferring elements, as it shown in Fig.20c. In the process of molding the material 176 the external force-transferring elements this material will go into the cavities 170, 172 creating strong and reliable mechanical connection with the additional force-transferring element 162. At the same time the small gaps 165 and the ridges 168 would prevent plastic material 176 from going into the closed trenches 131 around the pin 134.

Is should be noted, that the fabrication of the devices, according to this invention, on a common substrate carries inherent advantages from integration with other analog and digital circuits, circuits which provide but are not limited to analog signal amplification, analog-to-digital and digital-to-analog conversion, multiplexing, signal processing, gate logic, memory, digital interface, power management, encryption, compression and decompression, mixed signal processing, transmitting and receiving wireless signals, sensing components of other than force physical domains and combinations.

It should be understood that the microstructures of the die, structures of the finger-mice, finger buttons and micro-joysticks and methods of their fabrication do not limit the present invention, but only illustrate some of the various technical solutions covered by this invention. While the invention has been described in detail with reference to preferred embodiments, it is understood that variations and modifications thereof may be made without departing from the scope of the invention.
Therefore, while the invention has been described with respect to a limited number of embodiments, those skilled in the art, having benefit of this invention, will appreciate that other embodiments can be devised which do not depart from the scope of the invention as disclosed herein. Other aspects of the invention will be apparent from the following description and the appended claims.

## Claims

1. A three-dimensional force input control device for sensing vector forces and converting them into electronic signals for processing on a single substrate comprising:
a sensor die (10) formed within said single semiconductor substrate;
an elastic element (14) within said semiconductor substrate;
a frame (12) formed around said elastic element (14) and coupled with at least part of the periphery of said elastic element (14) all within the substrate;
at least three mechanical stress sensitive IC components (18, 20, 22) located in the elastic element (14) for providing electrical output signals proportional to the mechanical stress in the location of the IC components; and
a rigid island element (16) formed in the semiconductor substrate, surrounded by and coupled with the elastic element (14) and for transferring an external vector force to the elastic element (14) and through to the IC components, which provide electrical output signals,
wherein the height of the rigid island element (16) is bigger than the difference between the thicknesses of the frame (12) and the elastic element (14).

2. The force input control device according to claim 1, further comprising: a signal processing IC, wherein all elements of a die are formed within a single semiconductor substrate.

3. The force input control device according to claim 2, further comprising: an external force transferring element (13) covering said sensor die (10), for receiving the external force and providing transferring of this force into said rigid island element (16) to generate a combination of output signals dependent on the magnitude and the direction of the force applied, wherein the external force transferring element (13) is made from a material, which easily can be applied to multiple sensor dice in a batch fashion, said material being selected from a group of materials consisting essentially of: plastic materials, elastic materials, rubber-like materials, combinations of the above and any other material satisfying above requirements.

4. The force input device of Claim 1, wherein the semiconductor substrate is made from material selected from a group consisting essentially of silicon, germanium, silicon carbide, diamond-like carbon, gallium arsenide, gallium nitride, indium phosphide, and elements from III, IV and V groups of the Periodic Table.

5. The force input device in Claim 1, wherein the elastic element (14) in the semiconductor substrate has an annular or n-sided polygon geometry with uniform thickness smaller than the adjacent frame (12), the rigid island element (16) being located in the central area of the elastic element (14).

6. The force input device of Claim 1, further comprising an elastic element with nonuniform thickness.

7. The force input device of Claim 1, further comprising an elastic element (14) with at least one penetration in its thickness dimension.

8. The force input device in Claim 1, further comprising at least one stress concentrating element located on the elastic element (14) and having a shape selected from a group of shapes consisting essentially of V-groove, trapezoidal groove, groove with the sidewalls forming an angle of 90° with the surface of the diaphragm, and combinations thereof.

9. The force input device of Claim 1, wherein said rigid island element (16) is of a shape selected from a group of shapes consisting of cone, cylinder, semi-sphere, sphere, faceted cone, faceted cylinder, faceted semi-sphere, faceted sphere and combinations thereof.

10. The force input device of Claim 1, wherein said rigid island element (16) has at least one non-uniformity selected from a group of non-uniformities consisting of cavity, trench, hole, mesa, ridge, bridge, cantilever, area of negative slope and combinations thereof.

11. The force input device of Claim 1, further comprising a spring element (40) coupling the external force to the rigid island element (16), said spring element (40) selected from a group of spring elements consisting essentially of spring, thin beam, wire, elastic plastic button, elastic plastic stem, elastic plastic rocker button, spine-like structure, elastic dome with mechanical feedback, plastic shell filled in with liquid, plastic shell filled with gel, elastomeric button or combinations thereof.

12. The force input device of Claim 1, further comprising at least one stress sensitive IC component (18, 20, 22) selected from a group of stress sensitive IC components consisting essentially of piezoresistor, pn-junction, tunnel diode, Schottky diode, shear stress component, piezoresistive Wheatstone bridge, MOS transistor, complementary pair of CMOS transistors, bipolar transistor, pair of *p-n-p* and *n-p-n* bipolar transistors, bipolar transistor and at least one piezoresistor connected to transistor, MOS transistor and at least one piezoresistor connected to transistor, bipolar transistor circuit, and CMOS transistor circuit or combinations thereof.

13. The force input device of Claim 1, further comprising electronic circuitry which provides functions selected from a group of functions consisting essentially of analog signal amplification, analog-to-digital and digital-to-analog conversion, multiplexing, signal processing, gate logic, memory, digital interface, power management, encryption, compression and decompression, mixed signal processing, transmitting and receiving wireless signals, sensing various physical domains other than force and combinations thereof.

14. The force input device of Claim 1, further comprising an additional rigid force-transferring element connected to the top portion of the rigid island element (16) and providing bigger surface area than the top of the rigid island element for better connection with an external force transferring element, for protection of the elastic element (14) from the side of the rigid island element (16) and made from a material chosen from a group of materials: plastic, metal, semiconductor, ceramic, glass and combination of the above.

15. The force input device of Claim 1, further comprising an additional rigid force-transferring element connected to the top portion of the rigid island element (16) and a springy shell (39, 70) for mechanical feedback allowing sensing a click of a pressed button and generate signals for activation of required electronic action.

16. The force input device of Claim 1, further comprising an additional rigid force-transferring element (35) connected to the top portion of the rigid island element (16) and having additional cavities, trenches, bumps and ridges for better adhesion with the external force-transferring element, for protecting the elastic element (14) and for additional mechanical overload protection.

17. A method of fabricating a three-dimensional force input control device for sensing vector forces and converting them into electronic signals for processing on a single substrate, the method comprises the steps of:
providing a semiconductor substrate having a first side and a second side;
fabricating stress-sensitive IC components (18, 20, 22) and signal processing IC (18, 20, 22) on the first side of the substrate;
fabricating closed trenches on the second side of the substrate, the trenches forming boundaries defining an elastic element (14), a frame area (12) formed around said elastic element, and a rigid island element (16) being surrounded by said elastic element; and
removing additional substrate material from the second side of the substrate in the frame area (12) leaving the dimension of the rigid island element (16) protruding outward from the second side and larger than the remaining thickness dimension of the frame area (12) minus the thickness of the elastic element (14),
whereby the rigid island element (16) extends out from the substrate for coupling with external force transferring elements or for receiving external mechanical forces, and for transferring an external vector force to the elastic element and through to the IC components which provide electrical output signals.

18. The method of claim 17, wherein the step of removing part of the substrate from the frame area of the second side is done by a process selected from a group consisting essentially of selective etching, mechanical cutting, laser cutting and combinations thereof.

19. The method of claim 17, wherein the step of fabricating the closed trenches on the second side of the substrate within a die area further comprises the steps of:
depositing protective masking layer on the second side of the substrate;
photolithographically defining a pattern of the rigid island element (16), the elastic element (14) and the frame area;
removing masking layer from the elastic element area; and
etching substrate from the second side of the elastic element area to a selected thickness.

20. The method of claim 17, wherein the steps of fabricating closed trenches on the second side of the substrate within a die area and the step of removing part of the substrate from the second side of the substrate in the frame area (12) further comprises the steps of:
depositing at least one protective masking layer on the second side of the substrate;
photolithographically defining the pattern of the rigid island element (16), the elastic element (14) and the frame area (12) on the substrate;
removing the masking layer from the elastic element (14);
etching substrate from the second side in the elastic element (14) to the depth dimension between final thickness of the frame area and elastic elements, through the masking layer on the rigid island element (16) and the photoresist layer on the frame area;
removing masking layer from the frame area; and
etching the elastic element (14) and the frame area (12) on said second side to the predetermined thickness of the elastic element (14).

21. The method of claim 17, wherein the step of fabricating closed trenches on the second side of the substrate within each die area and the step of removing some of the substrate from the second side in the frame area (12) further comprises the steps of:
depositing a first protective masking layer on the substrate;
photolithographically defining and protecting a pattern of the rigid island element (16);
removing the first masking layer from the elastic element (14) and the frame area (12);
depositing a second protective masking layer on the substrate;
photolithographically defining a pattern of the elastic element (14);
removing the second masking layer from the elastic element (14);
etching the elastic element (14) from the second side of the substrate to a certain depth;
removing the second masking layer from the frame area (12); and
etching the elastic element and the frame area from the second side of the substrate to a selected thickness of the elastic element (14).

22. The method of claim 17, wherein the step of fabricating closed trenches on the second side of the substrate within each die area and the step of removing a portion of the substrate from the second side of the substrate in the frame area, further comprises the steps of:
depositing a protective masking layer on the substrate;
photolithography defining the pattern of the rigid island element (16), elastic element (14) and frame area (12);
removing the masking layer from the elastic element (14);
etching the elastic element to a selected thickness;
depositing a protective masking layer on the substrate including trenches and elastic element;
removing the masking layer from the frame area (12); and
etching the frame area (12) to a selected thickness.

23. The method of claim 17, wherein the steps of fabricating closed trenches on the second side of the substrate within a die area and the step of removing part of the substrate from the second side in the frame area further comprises the steps of:
depositing a first protective masking layer on the substrate;
depositing a second protective masking layer on the substrate having an etching rate selectivity to the first masking layer;
photolithographically defining the pattern of the rigid island element (16) on the second masking layer;
removing the second masking layer from the elastic element (14) and the frame area (12);
photolithographically defining a pattern for the elastic element (14) and the frame area (12) on the first masking layer;
removing the first masking layer from the elastic element (14);
etching the elastic element area to a selected thickness on said second side;
removing the first masking layer from the frame area (12) leaving the second masking layer on the rigid island element (16); and
etching the elastic element (14) and frame area (12) from the second side of the substrate to pre-selected thickness of the elastic element.

24. The method of claim 17, wherein the step of fabricating closed trenches on the second side of the substrate within a die area and the step of removing part of the substrate from the second side in the frame area further comprise the steps of:
depositing the protective masking layer on the substrate;
photolithographically defining the pattern of the rigid island element (16) on the masking layer;
photolithographically defining the pattern of the elastic element (14) and the frame area (12);
etching substrate from the elastic element of said second side to the depth dimension of the difference between final thickness of the frame and thickness of the elastic element (14) through the masking layer on the rigid island element (16) and the photoresist layer on the frame area (12);
removing photoresist masking layer from the frame area (12);
etching substrate from the elastic element (14) and frame area (12) on said second side to a selected thickness of the elastic element (14).

25. The method of claim 17, further comprising a process for separating dice from the wafer substrate, having the steps of:
depositing the protective masking layer on the second side of the substrate;
photolithographically defining the pattern of the rigid island element (16) on the masking layer;
photolithographically defining the pattern of the elastic element (14) and frame area (12) and separating dice trenches;
etching substrate material from the second side of the substrate in the elastic elements and separating dice trenches to a selected thickness using the etching masking layer on the rigid island elements and the photoresist layer on the frame area as protection from the etching;
removing photoresist masking layer from the frame area; and
etching substrate from the second side in the elastic element and frame area and separating dice trenches to a pre-determined thickness of the elastic element.

26. The method of claim 17, further comprising the steps of:
aligning an additional machined substrate with the original substrate;
bonding the substrates to each other, and
dicing the bonded substrates into individual dice.

27. The method of claim 26, further comprising the step of:
placing springy shell elements (39, 70) on the force-transferring elements.

28. The method of claim 26, further comprising the steps of:
depositing plastic material on the surface of bonded substrates for forming external force transferring elements, and
shaping the plastic material on the surface of bounded, substrates to selected shapes in a batch fabricating process.

29. The method of claim 26, further comprising the steps of:
positioning individual dice on an additional substrate at a selected pitch;
depositing plastic material on the surface of the additional substrate for forming external force transferring elements;
shaping the plastic material on the surface of the additional substrate to the selected shape; and
separating individual dice from the additional substrate to form devices.

## Patentansprüche

1. Steuerungseinrichtung für dreidimensional eingeleitete Kräfte, um auf einem einzelnen Substrat Vektorkräfte zu erfassen und zum Verarbeiten in elektronische Signale zu konvertieren, mit:
einem Sensorenchip (10), der innerhalb des einzelnen Halbleitersubstrats ausgebildet ist;
einem elastischen Element (14) innerhalb des Halbleitersubstrats;
einem Rahmen (12), der um das elastische Element (14) herum ausgebildet ist und wenigstens mit einem Teil des Umfangs des elastischen Elements (14) gekoppelt ist, der vollständig innerhalb des Substrats liegt;
wenigstens drei mechanischen spannungssensitiven IC-Komponenten (18, 20, 22), die in dem elastischen Element (14) angeordnet sind, um elektrische Ausgabesignale proportional zu der mechanischen Spannung an dem Ort der IC-Komponenten bereitzustellen; und
einem starren Inselelement (16), das in dem Halbleitersubstrat ausgebildet ist, das umgeben von und gekoppelt mit dem elastischen Element (14) ist und das zum Übertragen einer externen Vektorkraft zu dem elastischen Element (14) und durch die IC-Komponenten, die elektrische Ausgabesignale bereitstellen, hindurch dient,
wobei die Höhe des starren Inselelements (16) größer als die Differenz zwischen der Dicke des Rahmens (12) und des elastischen Elements (14) ist.

2. Steuerungseinrichtung für eingeleitete Kräfte nach Anspruch 1, ferner mit: einem Signalverarbeitungs-IC, wobei alle Elemente eines Chips innerhalb eines einzelnen Halbleitersubstrats ausgebildet sind.

3. Steuerungseinrichtung für eingeleitete Kräfte nach Anspruch 2, ferner mit: einem externen Kraftübertragungselement (13), das den Sensorenchip (10) bedeckt, zum Empfangen der externen Kraft und zum Bereitstellen einer Übertragung dieser Kraft zu dem starren Inselelement (16), um eine Kombination an Ausgabesignalen in Abhängigkeit von der Größe und Richtung der angewandten Kraft zu erzeugen, wobei das externe Kraftübertragungselement (13) aus einem Material hergestellt ist, das leicht für mehrere Sensorenchips in einer Massenproduktion benutzt werden kann, wobei das Material aus der Gruppe aus Materialien ausgewählt ist, die im Wesentlichen besteht aus: Kunststoffmaterialien, elastische Materialien, gummiähnliche Materialien, Kombinationen der oben genannten und ein beliebiges anderes Material, das die obigen Bedingungen erfüllt.

4. Krafteingabeeinrichtung nach Anspruch 1, bei der das Halbleitersubstrat aus einem Material hergestellt ist, das aus einer Gruppe ausgewählt ist, die im Wesentlichen aus Silizium, Germanium, Siliziumkarbid, diamantartiger Kohlenstoff, Galliumarsenid, Galliumnitrid, Indiumphosphid und Elementen der Gruppen III, IV und V des Periodensystems besteht.

5. Krafteingabeeinrichtung nach Anspruch 1, bei der das elastische Element (14) im Halbleitersubstrat eine ringförmige oder n-seitige Polygonform mit einer gleichmäßigen Dicke, die geringer ist als diejenige des benachbarten Rahmens (12), aufweist, wobei das starre Inselelement (16) in der mittleren Fläche des elastischen Elements (14) angeordnet ist.

6. Krafteingabeeinrichtung nach Anspruch 1, ferner mit einem elastischen Element mit ungleichmäßiger Dicke.

7. Krafteingabeeinrichtung nach Anspruch 1, ferner mit einem elastischen Element (14) mit wenigstens einer Durchdringung in dessen Dickenrichtung.

8. Krafteingabeeinrichtung nach Anspruch 1, ferner mit wenigstens einem Spannungssammelelement, das auf dem elastischen Element (14) angeordnet ist und das eine Form aufweist, die aus der Gruppe an Formen ausgewählt wurde, die im Wesentlichen aus einer V-förmigen Nut, einer trapezförmigen Nut, einer Nut, bei der die Seitenwände einen Winkel von 90° mit der Membranoberfläche bilden und Kombinationen aus diesen besteht.

9. Krafteingabeeinrichtung nach Anspruch 1, bei der das starre Inselelement (16) von einer Gestalt ist, die aus der Gruppe an Gestalten ausgewählt ist, die aus einem Kegel, einem Zylinder, einer Halbkugel, einer Kugel, einem mehrschichtigen Kegel, einem mehrschichtigen Zylinder, einer mehrschichtigen Halbkugel, einer mehrschichtigen Kugel und Kombinationen aus diesen besteht.

10. Krafteingabeeinrichtung nach Anspruch 1, bei der das starre Inselelement (16) wenigstens eine Ungleichmäßigkeit aufweist, die aus einer Gruppe aus Ungleichmäßigkeiten ausgewählt ist, die aus einer Vertiefung, einem Einschnitt, einem Loch, einem Plateau, einem Grat, einem Steg, einem Ausleger, einer Fläche von negativer Steigung und Kombinationen aus diesen besteht.

11. Krafteingabeeinrichtung nach Anspruch 1, ferner mit einem Federelement (40), das die externe Kraft mit dem starren Inselelement (16) koppelt, wobei das Federelement (40) aus einer Gruppe aus Federelementen ausgewählt ist, die im Wesentlichen aus einer Feder, einem dünnen Träger, einem Draht, einem elastischen Kunststoffknopf, einer elastischen Kunststoffzapfen, einem elastischen Kunststoffwippknopf, einer buchrückenähnlichen Struktur, einer elastischen Haube mit mechanischer Rückführung, einer Kunststoffhülle, die mit Flüssigkeit gefüllt ist, einer Kunststoffhülle, die mit Gel gefüllt ist, einem Elastomerknopf und Kombinationen aus diesen besteht.

12. Krafteingabeeinrichtung nach Anspruch 1, ferner mit wenigstens einer spannungssensitiven IC-Komponente (18, 20, 22), die aus einer Gruppe aus spannungssensitiven IC-Komponenten ausgewählt ist, die im Wesentlichen aus einem Piezoresistor, pn-Übergang, Tunneldiode, Schottky-Diode, Scherspannungskomponente, piezoresistive Wheatstone-Brücke, MOS-Transistor, komplementären Paar an CMOS-Transistoren, bipolaren Transistor, Paar aus p-n-p und n-p-n bipolaren Transistoren, bipolaren Transistor mit wenigstens einem Piezoresistor, der mit dem Transistor verbunden ist, einem MOS-Transistor mit wenigstens einem Piezoresistor, der mit dem Transistor verbunden ist, einem bipolaren Transistorschaltkreis und einem CMOS-Transistorschaltkreis oder Kombinationen aus diesen besteht.

13. Krafteingabeeinrichtung nach Anspruch 1, ferner mit einem elektronischen Schaltkreis, der Funktionen zur Verfügung stellt, die aus einer Gruppe an Funktionen ausgewählt sind, die im Wesentlichen aus der analogen Signalverstärkung, Umwandlung von analog nach digital oder von digital nach analog, Multiplexverarbeitung, Signalverarbeitung, Gate-Logik, Speicherung, digitale Schnittstelle, Strommanagement, Verschlüsselung, Kompression und Dekompression, Mixed-Signal-Verarbeitung, Senden und Empfangen von Funksignalen, Wahrnehmen von verschiedenen physikalischen Größen abgesehen von einer Kraft und Kombinationen aus diesen besteht.

14. Krafteingabeeinrichtung nach Anspruch 1, ferner mit einem zusätzlichen starren Kraftübertragungselement, das mit dem obersten Abschnitt des starren Inselelements (16) verbunden ist und das eine größere Oberfläche bereitstellt als das Oberteil des starren Inselelements, um für eine bessere Verbindung mit einem externen Kraftübertragungselement zu sorgen, das zum Schutz des elastischen Elements (14) von der Seite des starren Inselelements (16) dient und das aus einem Material hergestellt ist, das aus einer Gruppe aus den Materialien: Kunststoff, Metall, Halbleiter, Keramik, Glas und Kombinationen der obigen gewählt ist.

15. Krafteingabeeinrichtung nach Anspruch 1, ferner mit einem zusätzlichen starren Kraftübertragungselement, das mit dem oberen Abschnitt des starren Inselelements (16) verbunden ist und mit einer federnden Schale (39, 70) zur mechanischen Rückkopplung, um ein Gefühl eines Klicks eines gedrückten Knopfs zu ermöglichen und um Signale zur Aktivierung einer gewünschten elektronischen Handlung zu erzeugen.

16. Krafteingabeeinrichtung nach Anspruch 1, ferner mit einem zusätzlichen starren Kraftübertragungselement (35), das mit dem oberen Abschnitt des starren Inselelements (16) verbunden ist und das zusätzliche Vertiefungen, Einschnitte, Vorsprünge und Grate zum besseren Haften an dem externen Kraftübertragungselement aufweist, um das elastische Element (14) zu schützen und zum zusätzlichen Schutz gegen eine mechanische Überlastung.

17. Steuerungseinrichtung für dreidimensional eingeleitete Kräfte, um auf einem einzelnen Substrat Vektorkräfte zu erfassen und zum Verarbeiten in elektronische Signale zu konvertieren, wobei das Verfahren als Schritte aufweist:
das Bereitstellen eines Halbleitersubstrats mit einer ersten Seite und einer zweiten Seite;
das Herstellen einer spannungssensitiven IC-Komponente (18, 20, 22) und eines Signalverarbeitungs-ICs (18, 20, 22) auf der ersten Seite des Substrats;
das Herstellen von geschlossenen Einschnitten auf der zweiten Seite des Substrats, wobei die Einschnitte Grenzen bilden, die ein elastisches Element (14), eine Rahmenfläche (12), die um das elastische Elemente herum ausgebildet ist, und ein starres Inselelement (16), das von dem elastischen Element umgeben ist, definieren; und
das Entfernen von zusätzlichem Substratmaterial von der zweiten Seite des Substrats innerhalb der Rahmenfläche (12), wobei die Abmessung des starren Inselelements (16) nach außen von der zweiten Seite aus hervorstehen gelassen wird und sie größer ist als die verbleibende Dickenabmessung der Rahmenfläche (12), von der die Dicke des elastischen Elements (14) abgezogen ist,
wobei das starre Inselelement (16) von der zweiten Seite des Substrats zum Koppeln mit Übertragungselementen für eine externe Kraft oder zum Empfangen von externen mechanischen Kräften und zum Übertragen einer externen Vektorkraft zu dem elastischen Element und durch die IC-Komponenten, welche elektrische Ausgabesignale bereitstellen, hindurch aufweist.

18. Verfahren nach Anspruch 17, bei dem der Schritt des Entfernens eines Teils des Substrats von dem Rahmenelement der zweiten Seite durch ein Verfahren vorgenommen wird, das aus einer Gruppe ausgewählt wurde, die im Wesentlichen aus selektivem Ätzen, mechanischem Schneiden, Laserschneiden oder Kombinationen aus diesen besteht.

19. Verfahren nach Anspruch 17, bei dem der Schritt des Herstellens der geschlossenen Einschnitte auf der zweiten Seite des Substrats innerhalb einer Chipfläche ferner als Schritte aufweist:
das Ablagern einer Maskenschutzschicht auf der zweiten Seite des Substrats;
das photolithographische Definieren eines Musters auf dem starren Inselelement (16), dem elastischen Element (14) und der Rahmenfläche;
das Entfernen der Maskenschicht aus der elastischen Elementfläche; und
das Ätzen des Substrats von der zweiten Seite der elastischen Elementfläche bis zu einer gewählten Dicke.

20. Verfahren nach Anspruch 17, bei dem die Schritte des Herstellens von geschlossenen Einschnitten auf der zweiten Seite des Substrats innerhalb einer Chipfläche und der Schritt des Entfernens eines Teils des Substrats von der zweiten Seite des Substrats innerhalb des Rahmenelements (12) ferner als Schritte aufweisen:
das Ablagern wenigstens einer Maskenschutzschicht auf der zweiten Seite des Substrats;
das photolithographische Definieren des Musters des starren Inselelements (16), des elastischen Elements (14) und der Rahmenfläche (12) auf dem Substrat;
das Entfernen der Maskenschicht von dem elastischen Element (14);
das Ätzen des Substrats von der zweiten Seite innerhalb des elastischen Elements (14) bis zu der Tiefenabmessung zwischen der endgültigen Dicke der Rahmenfläche und der elastischen Elemente durch die Maskenschicht auf dem starren Inselelement (16) und die Fotolackschicht auf den Rahmenelementen;
das Entfernen der Maskenschicht aus der Rahmenfläche; und
das Ätzen des elastischen Elements (14) und des Rahmenelements (12) auf der zweiten Seite bis zu der vorher festgelegten Dicke des elastischen Elements (14).

21. Verfahren nach Anspruch 17, bei dem der Schritt des Herstellens von geschlossenen Einschnitten auf der zweiten Seite des Substrats innerhalb jeder Chipfläche und der Schritt des Entfernens von Substrat von der zweiten Seite innerhalb des Rahmenelements (12) ferner als Schritte aufweist:
das Ablagern einer ersten Maskenschutzschicht auf dem Substrat;
das photolithographische Definieren und Schützen eines Musters des starren Inselelements (16);
das Entfernen der ersten Maskenschicht von dem elastischen Element (14);
das Ablagern einer zweiten Maskenschutzschicht auf dem Substrat;
das photolithographische Definieren eines Musters auf dem elastischen Element (14);
das Entfernen der zweiten Maskenschicht von dem elastischen Element (14);
das Ätzen des elastischen Elements (14) von der zweiten Seite des Substrats bis zu einer bestimmten Tiefe;
das Entfernen der zweiten Maskenschicht von dem Rahmenelement (12); und
das Ätzen des elastischen Elements und des Rahmenelements von der zweiten Seite des Substrats bis zu einer gewählten Dicke des elastischen Elements (14).

22. Verfahren nach Anspruch 17, bei dem der Schritt des Herstellens von geschlossenen Einschnitten auf der zweiten Seite des Substrats innerhalb jeder Chipfläche und der Schritt des Entfernens eines Abschnitts des Substrats von der zweiten Seite des Substrats innerhalb der Rahmenfläche ferner als Schritte aufweist:
das Ablagern einer Maskenschutzschicht auf dem Substrat;
das photolithographische Definieren des Musters des starren Inselelements (16), des elastischen Elements (14) und des Rahmenelements (12);
das Entfernen der Maskenschicht von dem elastischen Element (14);
das Ätzen des elastischen Elements bis zu einer gewählten Dicke;
das Ablagern einer Maskenschutzschicht auf dem Substrat einschließlich der Einschnitte und dem elastischem Element;
das Entfernen der Maskenschicht von dem Rahmenelement (12); und
das Ätzen des Rahmenelements (12) bis zu einer gewählten Dicke.

23. Verfahren nach Anspruch 17, bei dem der Schritt des Herstellens von geschlossenen Einschnitten auf der zweiten Seite des Substrats innerhalb einer Chipfläche und der Schritt des Entfernens eines Teils des Substrats von der zweiten Seite innerhalb des Rahmenelements ferner als Schritte aufweist:
das Ablagern einer ersten Maskenschutzschicht auf dem Substrat;
das Ablagern einer zweiten Maskenschutzschicht auf dem Substrat mit einer Ätzratenselektivität auf der ersten Maskenschicht;
das photolithographische Definieren des Musters des starren Inselelements (16) auf der zweiten Maskenschicht;
das Entfernen der zweiten Maskenschicht von dem elastischen Element (14) und dem Rahmenelement (12);
das photolithographische Definieren eines Musters für das elastische Element (14) und das Rahmenelement (12) auf der ersten Maskenschicht;
das Entfernen der ersten Maskenschicht von dem elastischen Element (14);
das Ätzen der elastischen Elementfläche bis zu einer gewählten Dicke auf der zweiten Seite;
das Entfernen der ersten Maskenschicht von dem Rahmenelement (12), wobei die zweite Maskenschicht auf dem starren Inselelement (16) gelassen wird; und
das Ätzen des elastischen Elements (14) und des Rahmenelements (12) von der zweiten Seite des Substrats bis zu einer vorher gewählten Dicke des elastischen Elements.

24. Verfahren nach Anspruch 17, bei dem der Schritt des Herstellens von geschlossenen Einschnitten auf der zweiten Seite des Substrats innerhalb einer Chipfläche und der Schritt des Entfernens eines Teils des Substrats von der zweiten Seite innerhalb des Rahmenelements (12) ferner als Schritte aufweist:
das Ablagern der Maskenschutzschicht auf dem Substrat;
das photolithographische Definieren des Musters des starren Inselelements (16) auf der Maskenschicht;
das photolithographische Definieren des Musters des elastischen Elements (14) und des Rahmenelements (12);
das Ätzen des Substrats von dem elastischen Element der zweiten Seite bis zu einer Tiefenabmessung der Differenz zwischen der endgültigen Dicke des Rahmens und der Dicke des elastischen Elements (14) durch die Maskenschicht auf dem starren Inselelement (16) und der Fotolackschicht auf dem Rahmenelement (12);
das Entfernen der Fotolackmaskenschicht von dem Rahmenelement (12);
das Ätzen des Substrats von dem elastischen Element (14) und dem Rahmenelement (12) auf der zweiten Seite bis zu einer gewählten Dicke des elastischen Elements (14).

25. Verfahren nach Anspruch 17, ferner mit einem Vorgang zum Trennen der Chips von dem Wafersubstrat mit den Schritten des:
Ablagerns der Maskenschutzschicht auf der zweiten Seite des Substrats;
photolithographischen Definierens des Musters des starren Inselelements (16) auf der Maskenschicht;
photolithographischen Definierens des Musters des elastischen Elements (14) und des Rahmenelements (12) und des Trennens der Chipeinschnitte;
Ätzens von Substratmaterial von der zweiten Seite des Substrats in den elastischen Elementen und Trennens der Chipeinschnitte bis zu einer gewählten Dicke unter Benutzung der Ätzmaskenschicht auf den starren Inselelementen und der Fotolackschicht auf den Rahmenelementen als Schutz vor dem Ätzen;
Entfernens der Fotolackmaskenschicht von den Rahmenelementen; und
Ätzens des Substrats von der zweiten Seite beim elastischen Element und beim Rahmenelement und des Trennens der Chipeinschnitte bis zu einer vorher festgelegten Dicke des elastischen Elements.

26. Verfahren nach Anspruch 17, ferner mit den Schritten des:
Ausrichtens eines zusätzlichen bearbeiteten Substrats an dem ursprünglichen Substrat;
Verbindens der Substrate miteinander, und
Zerschneidens der verbundenen Substrate in einzelne Chips.

27. Verfahren nach Anspruch 26, ferner mit dem Schritt des:
Anordnens von federnden Schalenelementen (39, 70) auf den Kraftübertragungselementen.

28. Verfahren nach Anspruch 26, ferner mit den Schritten des:
Ablagerns von Kunststoffmaterial auf der Oberfläche der verbundenen Substrate zum Ausbilden von Übertragungselementen für eine externe Kraft, und
Formens des Kunststoffmaterials auf der Oberfläche der verbundenen Substrate in gewünschte Gestalten in einem Massenherstellungsverfahren.

29. Verfahren nach Anspruch 26, ferner mit den Schritten des:
Positionierens einzelner Chips auf einem zusätzlichen Substrat mit einem gewählten Abstand;
Ablagerns eines Kunststoffmaterials auf der Oberfläche des zusätzlichen Substrats zum Ausbilden von Übertragungselementen für eine externe Kraft;
Formens des Kunststoffmaterials auf der Oberfläche des zusätzlichen Substrats in eine gewählte Form; und
Trennens von einzelnen Chips von dem zusätzlichen Substrat, um Einrichtungen auszubilden.

## Revendications

1. Dispositif de commande d'entrée de force tridimensionnel pour détecter des forces vectorielles et les convertir en signaux électroniques pour un traitement sur un substrat unique, comprenant :
une puce de capteur (10) formée à l'intérieur dudit substrat semiconducteur unique ;
un élément élastique (14) à l'intérieur dudit substrat semiconducteur ;
un cadre (12) formé autour dudit élément élastique (14) et couplé à au moins une partie de la périphérie dudit élément élastique (14) à l'intérieur de tout le substrat ;
au moins trois composants de circuits intégrés sensibles aux contraintes mécaniques (18, 20, 22) disposés dans l'élément élastique (14) pour délivrer des signaux de sortie électriques proportionnels à la contrainte mécanique dans l'emplacement des composants de circuits intégrés ; et
un élément d'îlot rigide (16) formé dans le substrat semiconducteur, entouré par l'élément élastique (14) et couplé à celui-ci, et servant à transférer une force vectorielle extérieure à l'élément élastique (14), et, à travers celui-ci, aux composants de circuits intégrés, qui délivrent des signaux de sortie électriques,
dans lequel la hauteur de l'élément d'îlot rigide (16) est supérieure à la différence entre les épaisseurs du cadre (12) et de l'élément élastique (14).

2. Dispositif de commande d'entrée de force selon la revendication 1, comprenant de plus : un circuit intégré de traitement du signal, dans lequel tous les éléments d'une puce sont formés à l'intérieur d'un substrat semiconducteur unique.

3. Dispositif de commande d'entrée de force selon la revendication 2, comprenant de plus : un élément de transfert de force extérieur (13) recouvrant ladite puce de capteur (10), de façon à recevoir la force extérieure et à assurer un transfert de cette force dans ledit élément d'îlot rigide (16) de façon à générer une combinaison de signaux de sortie dépendant de l'ampleur et de la direction de la force appliquée, l'élément de transfert de force extérieure (13) étant réalisé en un matériau qui peut facilement être appliqué à de multiples puces de capteur selon un mode par lots, ledit matériau étant sélectionné parmi un groupe de matériaux comprenant essentiellement : des matières plastiques, des matériaux élastiques, des matériaux du type caoutchouc, des combinaisons de ce qui précède et de tout autre matériau satisfaisant aux exigences ci-dessus.

4. Dispositif d'entrée de force selon la revendication 1, dans lequel le substrat semiconducteur est réalisé en un matériau sélectionné parmi un groupe comprenant essentiellement le silicium, le germanium, le carbure de silicium, le carbone du type diamant, l'arséniure de gallium, le nitrure de gallium, le phosphure d'indium et des éléments des groupes III, IV et V du Tableau Périodique.

5. Dispositif d'entrée de force selon la revendication 1, dans lequel l'élément élastique (14) dans le substrat semiconducteur a une géométrie annulaire ou polygonale à n côtés avec une épaisseur uniforme inférieure à celle du cadre adjacent (12), l'élément d'îlot rigide (16) étant disposé dans la zone centrale de l'élément élastique (14).

6. Dispositif d'entrée de force selon la revendication 1, comprenant de plus un élément élastique avec une épaisseur non uniforme.

7. Dispositif d'entrée de force selon la revendication 1, comprenant de plus un élément élastique (14) avec au moins une pénétration dans la dimension de son épaisseur.

8. Dispositif d'entrée de force selon la revendication 1, comprenant de plus au moins un élément de concentration de contraintes disposé sur l'élément élastique (14) et ayant une forme sélectionnée parmi un groupe de formes comprenant essentiellement une rainure en V, une rainure trapézoïdale, une rainure avec les parois latérales qui forment un angle de 90° avec la surface du diaphragme, et des combinaisons de celles-ci.

9. Dispositif d'entrée de force selon la revendication 1, dans lequel ledit élément d'îlot rigide (16) a une forme sélectionnée parmi un groupe de formes comprenant un cône, un cylindre, une demi-sphère, une sphère, un cône à facettes, un cylindre à facettes, une demi-sphère à facettes, une sphère à facettes et des combinaisons de ceux-ci.

10. Dispositif d'entrée de force selon la revendication 1, dans lequel ledit élément d'îlot rigide (16) comporte au moins une non-uniformité sélectionnée parmi un groupe de non-uniformités comprenant une cavité, une tranchée, un trou, une mesa, une arête, un pont, un porte-à-faux, une zone d'une pente négative et des combinaisons de ceux-ci.

11. Dispositif d'entrée de force selon la revendication 1, comprenant de plus un élément de ressort (40) couplant la force extérieure à l'élément d'îlot rigide (16), ledit élément de ressort (40) étant sélectionné parmi un groupe d'éléments de ressort comprenant essentiellement un ressort, une poutre mince, un fil, un bouton en matière plastique élastique, une tige en matière plastique élastique, un bouton oscillant en matière plastique élastique, une structure du type épine dorsale, un dôme élastique avec rétroaction mécanique, une coque en matière plastique intérieurement remplie d'un liquide, une coque en matière plastique remplie d'un gel, un bouton élastomère ou des combinaisons de ceux-ci.

12. Dispositif d'entrée de force selon la revendication 1, comprenant de plus au moins un composant de circuits intégrés sensible aux contraintes, (18, 20, 22) sélectionné parmi un groupe de composants de circuits intégrés sensibles aux contraintes comprenant essentiellement une piézo-résistance, une jonction pn, une diode à effet tunnel, une diode Schottky, un composant à contrainte de cisaillement, un pont de Wheatstone piézo-résistif, un transistor métal-oxyde-semiconducteur (MOS), une paire complémentaire de transistors métal-oxyde-semiconducteur complémentaires (CMOS), un transistor bipolaire, une paire de transistors bipolaires p-n-p et n-p-n, un transistor bipolaire et au moins une piézo-résistance connectée au transistor, un transistor métal-oxyde-semiconducteur et au moins une piézo-résistance connectée au transistor, un circuit à transistors bipolaires, et un circuit à transistors métal-oxyde-semiconducteur complémentaires ou des combinaisons de ceux-ci.

13. Dispositif d'entrée de force selon la revendication 1, comprenant de plus des circuits électroniques qui assurent des fonctions sélectionnées parmi un groupe de fonctions comprenant essentiellement une amplification de signal analogique, une conversion analogique/numérique et numérique/analogique, un multiplexage, un traitement du signal, une logique à portes, une mémoire, une interface numérique, une gestion de puissance, un cryptage, une compression et une décompression, un traitement de signal mixte, une émission et une réception de signaux sans fil, une détection de différents domaines physiques autres qu'une force et des combinaisons de ceux-ci.

14. Dispositif d'entrée de force selon la revendication 1, comprenant de plus un élément de transfert de force rigide additionnel connecté à la partie supérieure de l'élément d'îlot rigide (16) et présentant une surface supérieure à celle du sommet de l'élément d'îlot rigide pour une meilleure connexion avec un élément de transfert de force extérieur, pour une protection de l'élément élastique (14) depuis le côté de l'élément d'îlot rigide (16), et réalisé en un matériau choisi parmi un groupe de matériaux : une matière plastique, un métal, un semiconducteur, une céramique, un verre et des combinaisons de ce qui précède.

15. Dispositif d'entrée de force selon la revendication 1, comprenant de plus un élément de transfert de force rigide additionnel relié à la partie supérieure de l'élément d'îlot rigide (16) et une coque élastique (39, 70) pour une rétroaction mécanique permettant la détection d'un clic d'un bouton pressé et pour générer des signaux pour l'activation d'une action électronique requise.

16. Dispositif d'entrée de force selon la revendication 1, comprenant de plus un élément de transfert de force rigide additionnel (35) relié à la partie supérieure de l'élément d'îlot rigide (16) et comportant des cavités, des tranchées, des protubérances et des arêtes additionnelles pour une meilleure adhérence à l'élément de transfert de force extérieur, pour protéger l'élément élastique (14) et pour une protection additionnelle contre les surcharges mécaniques.

17. Procédé de fabrication d'un dispositif de commande d'entrée de force tridimensionnel pour détecter des forces vectorielles et les convertir en signaux électroniques pour un traitement sur un substrat unique, le procédé comprenant les étapes consistant à :
disposer un substrat semiconducteur comportant un premier côté et un deuxième côté ;
fabriquer des composants de circuits intégrés sensibles aux contraintes (18, 20, 22) et un circuit intégré de traitement du signal (18, 20, 22) sur le premier côté du substrat ;
fabriquer des tranchées fermées sur le deuxième côté du substrat, les tranchées formant des limites définissant un élément élastique (14), une zone de cadre (12) formée autour dudit élément élastique, et un élément d'îlot rigide (16) qui est entouré par ledit élément élastique ; et
retirer un matériau de substrat additionnel depuis le deuxième côté du substrat dans la zone de cadre (12) en laissant la dimension de l'élément d'îlot rigide (16) faire saillie vers l'extérieur à partir du deuxième côté et être supérieure à la dimension de l'épaisseur restante de la zone de cadre (12) moins l'épaisseur de l'élément élastique (14),
grâce auquel l'élément d'îlot rigide (16) s'étend vers l'extérieur à partir du substrat pour un couplage avec des éléments de transfert de force extérieurs ou pour recevoir des forces mécaniques extérieures, et pour transférer une force vectorielle extérieure à l'élément élastique et, à travers celui-ci, aux composants de circuits intégrés qui délivrent des signaux de sortie électriques.

18. Procédé selon la revendication 17, dans lequel l'étape de retrait d'une partie du substrat à partir de la zone de cadre du deuxième côté est effectuée par un processus sélectionné parmi un groupe comprenant essentiellement la gravure sélective, la coupe mécanique, la coupe au laser et des combinaisons de celles-ci.

19. Procédé selon la revendication 17, dans lequel l'étape de fabrication des tranchées fermées sur le deuxième côté du substrat à l'intérieur d'une zone de puce comprend de plus les étapes consistant à :
déposer une couche de masquage protectrice sur le deuxième côté du substrat ;
définir de façon photolithographique un motif de l'élément d'îlot rigide (16), de l'élément élastique (14) et de la zone de cadre ;
retirer une couche de masquage de la zone d'élément élastique ; et
graver le substrat à partir du deuxième côté de la zone d'élément élastique jusqu'à une épaisseur sélectionnée.

20. Procédé selon la revendication 17, dans lequel les étapes de fabrication de tranchées fermées sur le deuxième côté du substrat à l'intérieur d'une zone de puce et l'étape de retrait d'une partie du substrat à partir du deuxième côté du substrat dans la zone de cadre (12) comprennent de plus les étapes consistant à :
déposer au moins une couche de masquage protectrice sur le deuxième côté du substrat ;
définir de façon photolithographique le motif de l'élément d'îlot rigide (16), de l'élément élastique (14) et de la zone de cadre (12) sur le substrat ;
retirer la couche de masquage de l'élément élastique (14) ;
graver le substrat à partir du deuxième côté dans l'élément élastique (14) jusqu'à la dimension de profondeur entre l'épaisseur finale de la zone de cadre et des éléments élastiques, à travers la couche de masquage sur l'élément d'îlot rigide (16) et la couche de photoréserve sur la zone de cadre ;
retirer la couche de masquage de la zone de cadre ; et
graver l'élément élastique (14) et la zone de cadre (12) sur ledit deuxième côté jusqu'à l'épaisseur prédéterminée de l'élément élastique (14).

21. Procédé selon la revendication 17, dans lequel l'étape de fabrication de tranchées fermées sur le deuxième côté du substrat à l'intérieur de chaque zone de puce et l'étape de retrait d'une partie du substrat à partir du deuxième côté dans la zone de cadre (12) comprennent de plus les étapes consistant à :
déposer une première couche de masquage protectrice sur le substrat ;
définir de façon photolithographique et protéger un motif de l'élément d'îlot rigide (16) ;
retirer la première couche de masquage de l'élément élastique (14) et de la zone de cadre (12) ;
déposer une deuxième couche de masquage protectrice sur le substrat ;
définir de façon photolithographique un motif de l'élément élastique (14) ;
retirer la deuxième couche de masquage de l'élément élastique (14) ;
graver l'élément élastique (14) à partir du deuxième côté du substrat jusqu'à une certaine profondeur ;
retirer la deuxième couche de masquage de la zone de cadre (12) ; et
graver l'élément élastique et la zone de cadre à partir du deuxième côté du substrat jusqu'à une épaisseur sélectionnée de l'élément élastique (14).

22. Procédé selon la revendication 17, dans lequel l'étape de fabrication de tranchées fermées sur le deuxième côté du substrat à l'intérieur de chaque zone de puce et l'étape de retrait d'une partie du substrat à partir du deuxième côté du substrat dans la zone de cadre comprennent de plus les étapes consistant à :
déposer une couche de masquage protectrice sur le substrat ;
définir de façon photolithographique le motif de l'élément d'îlot rigide (16), de l'élément élastique (14) et de la zone de cadre (12) ;
retirer la couche de masquage de l'élément élastique (14) ;
graver l'élément élastique jusqu'à une épaisseur sélectionnée ;
déposer une couche de masquage protectrice sur le substrat, comprenant des tranchées et un élément élastique ;
retirer la couche de masquage de la zone de cadre (12) ; et
graver la zone de cadre (12) jusqu'à une épaisseur sélectionnée.

23. Procédé selon la revendication 17, dans lequel les étapes de fabrication de tranchées fermées sur le deuxième côté du substrat à l'intérieur d'une zone de puce et l'étape de retrait d'une partie du substrat à partir du deuxième côté dans la zone de cadre comprennent de plus les étapes consistant à :
déposer une première couche de masquage protectrice sur le substrat ;
déposer une deuxième couche de masquage protectrice sur le substrat, ayant une sélectivité de taux de gravure vis-à-vis de la première couche de masquage ;
définir de façon photolithographique le motif de l'élément d'îlot rigide (16) sur la deuxième couche de masquage ;
retirer la deuxième couche de masquage de l'élément élastique (14) et de la zone de cadre (12) ;
définir de façon photolithographique un motif pour l'élément élastique (14) et la zone de cadre (12) sur la première couche de masquage ;
retirer la première couche de masquage de l'élément élastique (14) ;
graver la zone d'élément élastique jusqu'à une épaisseur sélectionnée sur ledit deuxième côté ;
retirer la première couche de masquage de la zone de cadre (12), en laissant la deuxième couche de masquage sur l'élément d'îlot rigide (16) ; et
graver l'élément élastique (14) et la zone de cadre (12) à partir du deuxième côté du substrat jusqu'à une épaisseur présélectionnée de l'élément élastique.

24. Procédé selon la revendication 17, dans lequel l'étape de fabrication de tranchées fermées sur le deuxième côté du substrat à l'intérieur d'une zone de puce et l'étape de retrait d'une partie du substrat à partir du deuxième côté dans la zone de cadre comprennent de plus les étapes consistant à :
déposer la couche de masquage protectrice sur le substrat ;
définir de façon photolithographique le motif de l'élément d'îlot rigide (16) sur la couche de masquage ;
définir de façon photolithographique le motif de l'élément élastique (14) et de la zone de cadre (12) ;
graver le substrat à partir de l'élément élastique dudit deuxième côté jusqu'à la dimension de profondeur de la différence entre l'épaisseur finale du cadre et l'épaisseur de l'élément élastique (14) à travers la couche de masquage sur l'élément d'îlot rigide (16) et la couche de photoréserve sur la zone de cadre (12) ;
retirer la couche de masquage de photoréserve de la zone de cadre (12) ;
graver le substrat à partir de l'élément élastique (14) et de la zone de cadre (12) sur ledit deuxième côté jusqu'à une épaisseur sélectionnée de l'élément élastique (14).

25. Procédé selon la revendication 17, comprenant de plus un processus pour séparer des puces à partir du substrat en tranche, comportant les étapes consistant à :
déposer la couche de masquage protectrice sur le deuxième côté du substrat ;
définir de façon photolithographique le motif de l'élément d'îlot rigide (16) sur la couche de masquage ;
définir de façon photolithographique le motif de l'élément élastique (14) et de la zone de cadre (12) et séparer des tranchées de puces ;
graver le matériau de substrat à partir du deuxième côté du substrat dans les éléments élastiques et séparer des tranchées de puces jusqu'à une épaisseur sélectionnée en utilisant la couche de masquage de gravure sur les éléments d'îlot rigides et la couche de photoréserve sur la zone de cadre comme protection vis-à-vis de la gravure ;
retirer la couche de masquage de photoréserve de la zone de cadre ; et
graver le substrat à partir du deuxième côté dans l'élément élastique et la zone de cadre et séparer les tranchées de puces jusqu'à une épaisseur prédéterminée de l'élément élastique.

26. Procédé selon la revendication 17, comprenant de plus les étapes consistant à :
aligner un substrat usiné additionnel avec le substrat original ;
fixer les substrats l'un à l'autre, et
découper les substrats fixés en puces individuelles.

27. Procédé selon la revendication 26, comprenant de plus l'étape consistant à :
disposer des éléments de coque élastiques (39, 70) sur les éléments de transfert de force.

28. Procédé selon la revendication 26, comprenant de plus les étapes consistant à :
déposer une matière plastique sur la surface des substrats fixés afin de former des éléments de transfert de force extérieurs, et
mettre en forme la matière plastique sur la surface des substrats fixés sous des formes sélectionnées dans un processus de fabrication par lots.

29. Procédé selon la revendication 26, comprenant de plus les étapes consistant à :
positionner des puces individuelles sur un substrat additionnel à un pas sélectionné ;
déposer une matière plastique sur la surface du substrat additionnel afin de former des éléments de transfert de force extérieurs ;
mettre en forme la matière plastique sur la surface du substrat additionnel sous la forme sélectionnée ; et
séparer des puces individuelles du substrat additionnel afin de former des dispositifs.
